# EUROPEAN PATENT APPLICATION

(11) **EP 3 511 933 A1**
(43) Date of publication of application: **17.07.2019**
(21) Application number: 17923561.9
(22) Date of filing: 29.11.2017
(51) Int. Cl.: G10L 15/28, G10L 15/22, G06T 7/20, G06T 7/70

(54) **SYSTEM AND METHOD FOR PROVIDING VOICE RECOGNITION IMAGE FEEDBACK**

(30) Priority: 31.08.2017 KR 20170110933
(60) Divisional application: 19168848.0
(71) Applicant: Humax Co., Ltd., Yongin-si, Gyeonggi-do 17040 (KR)
(72) Inventor: PARK, Sung Heum, Yongin-si Gyeonggi-do 16975 (KR)
(74) Representative: Zardi, Marco
(86) International application number: PCT/KR2017/013777
(87) International publication number: WO 2019/045183

(57) **Abstract**

Voice recognition image feedback providing system and method capable of providing conveniently various services to a user is disclosed. A voice recognition image feedback device in the system comprises a voice recognition unit configured to recognize user's voice, an image feedback unit configured to output an image corresponding to the voice in a direction where the voice is inputted and a control unit configured to control the voice recognition unit and the image feedback unit. Here, wherein the image is outputted to a user peripheral location area so that the image is shown to the user, the user peripheral location area means an area having a radius of 3 meter based on a point at which the user locates, and at least part of the image is shown in the area having the radius of 3 meter.

## Description

### BACKGROUND

### 1. Field of the Invention

The present disclosure relates to a voice recognition image feedback providing system and method.

### 2. Description of the Related Art

Recently, a voice recognition technique has considerably developed. Various services using the voice recognition technique have been introduced.

However, most of the services provide simply only a sound, and thus it can't meet service desired by a user.

### SUMMARY

The invention provides voice recognition image feedback providing system and method capable of providing conveniently various services to a user.

According to one embodiment of the invention, a voice recognition image feedback device comprises: a voice recognition unit configured to recognize user's voice; an image feedback unit configured to output an image corresponding to the voice in a direction where the voice is inputted; and a control unit configured to control the voice recognition unit and the image feedback unit. Here, the image is outputted to a user peripheral location area so that the image is shown to the user, the user peripheral location area means an area having a radius of specific distance based on a point at which the user locates, and at least part of the image is shown in the area having the radius of specific distance.

According to another embodiment of the invention, a voice recognition image feedback device comprises: a voice recognition unit configured to recognize user's voice; a location tracking unit configured to track a location of the user; an image feedback unit configured to output an image corresponding to the voice; and a control unit configured to control the voice recognition unit, the location tracking unit and the image feedback unit. Here, the control unit requests re-input of the voice to the user when the voice is not related to image provision, request in the voice is unclear, the voice includes a forbidden word or the request in the voice can't be provided by the voice recognition image feedback device, and the image feedback unit outputs an image corresponding to the reinputted voice to an area corresponding to the tracked location of the user.

According to still another embodiment of the invention, a voice recognition image feedback device comprises: a voice recognition unit configured to recognize a voice; an image feedback unit configured to output an image corresponding to the voice in a direction where the voice is inputted; and a control unit configured to control the voice recognition unit and the image feedback unit. Here, the image is outputted through designated area or device when the area or the device on which the image is to be outputted is designated in the voice.

According to still another embodiment of the invention, a voice recognition image feedback device comprises: a voice recognition unit configured to recognize user's voice; an image feedback unit configured to output an image corresponding to the recognized voice; and a control unit configured to control operation of the voice recognition unit and the image feedback unit. Here, the control unit determines automatically depending on the voice whether the voice recognition image feedback device outputs only a sound without the image or outputs the image, and outputs the sound by controlling the sound feedback unit or outputs the image by controlling the image feedback unit according to the determining.

According to still another embodiment of the invention, a voice recognition image feedback device comprises: a body; and an image feedback unit formed on the body to be rotated. Here, the image feedback unit rotates in a direction corresponding to a user peripheral location area on which an image is to be outputted and then outputs the image corresponding to user's voice.

According to still another embodiment of the invention, a voice recognition image feedback device comprises: a voice recognition unit configured to recognize user's voice; an image feedback unit configured to output an image corresponding to the recognized voice; and a control unit configured to control operation of the voice recognition unit and the image feedback unit. Here, at least one of color, picture, resolution and size of the image or a sound matched with the image is changed according to the recognized voice, feeling of the user or biorhythm of the user, and the changed image is outputted on an area corresponding to a location of the user.

According to still another embodiment of the invention, a voice recognition image feedback device comprises: a voice recognition unit configured to recognize user's voice; an image feedback unit configured to output an image; and a control unit configured to control operation of the voice recognition unit and the image feedback unit. Here, corresponding image is automatically provided to an area corresponding to a location of the user according to feeling of the user detected based on at least one of tone of the voice, a word showing feeling in the voice or moving of the user, though user's request for requesting image provision is not included in the voice.

According to still another embodiment of the invention, a voice recognition image feedback device comprises: a voice recognition unit configured to recognize user's voice; a structure recognition unit configured to recognize a peripheral structure of the user; an image feedback unit configured to output an image corresponding to the recognized voice; and a control unit configured to control operation of the voice recognition unit and the image feedback unit. Here, the image feedback unit changes at least part of a focus of the image feedback unit, a location at which the image is to be outputted or the image depending on the recognized structure, and it outputs the image by reflecting the changing.

According to still another embodiment of the invention, a voice recognition image feedback device comprises: a voice recognition unit configured to recognize user's voice; an image feedback unit configured to output an image corresponding to the recognized voice; and an external device control unit connected to an external device and configured to control the external device. Here, the external device control unit changes a peripheral environment of the image by controlling the external device when the image is outputted.

According to still another embodiment of the invention, a main voice recognition image feedback device comprises: a communication unit connected to at least one sub voice recognition image feedback device; and an image feedback unit configured to transmit an image corresponding to user's voice to a sub voice recognition image feedback device corresponding to a location of a user through the communication unit. Here, the image is outputted to a user peripheral location area through the sub voice recognition image feedback device, the user peripheral location area means an area having a radius of specific distance based on a point at which the user locates, and at least part of the image is shown in the area having the radius of specific distance.

According to still another embodiment of the invention, a voice recognition image feedback device comprises: a voice recognition unit configured to recognize user's voice; an image feedback unit configured to output an image corresponding to the recognized voice; and a control unit configured to control the voice recognition unit and the image feedback unit. Here, a distance to which the image is to be outputted, an angle by which the image feedback unit outputs the image or a location at which the image is to be outputted is set to the voice recognition image feedback device, and the image feedback unit outputs the image to the set distance, the set angle or the set location in a direction where the voice is inputted.

According to one embodiment of the invention, a voice recognition image feedback providing method comprises: recognizing user's voice; and outputting an image corresponding to the voice in a direction where the voice is inputted. Here, the image is outputted to a user peripheral location area so that the image is shown to the user, the user peripheral location area means an area having a radius of specific distance based on a point at which the user locates, and at least part of the image is shown in the area having the radius of specific distance.

A voice recognition image feedback providing system and a method of operating the same according to the invention may recognize user's voice and output an image corresponding to the recognized voice to a location of the user. As a result, the user may obtain easily desired information and be conveniently served. The voice recognition image feedback providing system may provide various services to the user.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a voice recognition image feedback providing system according to a first embodiment of the invention;
FIG. 2 is a view illustrating a process of providing image feedback according to one embodiment of the invention;
FIG. 3 to FIG. 5 are views illustrating structure of an voice recognition image feedback device according to one embodiment of the invention;
FIG. 6 is a view illustrating a voice recognition image feedback providing system according to a second embodiment of the invention;
FIG. 7 is a block diagram illustrating a voice recognition image feedback device according to one embodiment of the invention;
FIG. 8 is a flowchart illustrating operation of a voice recognition image feedback providing system according to a third embodiment of the invention;
FIG. 9 is a flowchart illustrating a voice recognition image feedback providing system according to a fourth embodiment of the invention;
FIG. 10 is a flowchart illustrating a voice recognition image feedback providing system according to a fifth embodiment of the invention;
FIG. 11 is a flowchart illustrating a voice recognition image feedback providing system according to a sixth embodiment of the invention;
FIG. 12 is a flowchart illustrating operation of a voice recognition image feedback providing system according to a seventh embodiment of the invention;
FIG. 13 is a flowchart illustrating operation of a voice recognition image feedback providing system according to an eighth embodiment of the invention;
FIG. 14 is a flowchart illustrating operation of a voice recognition image feedback providing system according to a ninth embodiment of the invention;
FIG. 15 is a block diagram illustrating a voice recognition image feedback device according to another embodiment of the invention;
FIG. 16 is a flowchart illustrating operation of a voice recognition image feedback providing system according to a tenth embodiment of the invention;
FIG. 17 is a flowchart illustrating operation of a voice recognition image feedback providing system according to an eleventh embodiment of the invention;
FIG. 18 is a block diagram illustrating a voice recognition image feedback device according to still another embodiment of the invention;
FIG. 19 is a flowchart illustrating operation of a voice recognition image feedback providing system according to a twelfth embodiment of the invention;
FIG. 20 is a flowchart illustrating operation of a voice recognition image feedback providing system according to a thirteenth embodiment of the invention;
FIG. 21 is a view illustrating operation of a voice recognition image feedback providing system according to a fourteenth embodiment of the invention;
FIG. 22 is a block diagram illustrating a voice recognition image feedback device according to another embodiment of the invention;
FIG. 23 is a flowchart illustrating operation of a voice recognition image feedback providing system according to a fifteenth embodiment of the invention;
FIG. 24 is a flowchart illustrating a voice recognition image feedback providing system according to a sixteenth embodiment of the invention;
FIG. 25 is a view illustrating one example of a voice recognition image feedback providing process in FIG. 24;
FIG. 26 is a block diagram illustrating a voice recognition image feedback device according to a still another embodiment of the invention;
FIG. 27 is a flowchart illustrating operation of a voice recognition image feedback providing system according to seventeenth embodiment of the invention;
FIG. 28 is a flowchart illustrating operation of a voice recognition image feedback proving system according to an eighteenth embodiment of the invention;
FIG. 29 is a flowchart illustrating operation of a voice recognition image feedback providing system according to a nineteenth embodiment of the invention;
FIG. 30 is a block diagram illustrating a voice recognition image feedback device according to still another embodiment of the invention;
FIG. 31 is a flowchart illustrating operation of a voice recognition image feedback providing system according to a twentieth embodiment of the invention;
FIG. 32 is a flowchart illustrating operation of a voice recognition image feedback providing system according to a twenty-first embodiment of the invention;
FIG. 33 is a block diagram illustrating a voice recognition image feedback device according to still another embodiment of the invention;
FIG. 34 is a flowchart illustrating a voice recognition image feedback providing system according to a twenty second of the invention;
FIG. 35 is a view illustrating a voice recognition image feedback providing system according to another embodiment of the invention;
FIG. 36 is a view illustrating schematically a voice recognition image feedback providing system according to still another embodiment of the invention;
FIG. 37 is a view illustrating a voice recognition image feedback providing system according to still another embodiment of the invention;
FIG. 38 is a block diagram illustrating a main voice recognition image feedback device according to one embodiment of the invention;
FIG. 39 is a block diagram illustrating a sub voice recognition image feedback device according to one embodiment of the invention;
FIG. 40 is a flowchart illustrating operation of the voice recognition image feedback providing system in FIG. 37 according to one embodiment of the invention;
FIG. 41 is a flowchart illustrating operation of the voice recognition image feedback providing system in FIG. 37 according to another embodiment of the invention;
FIG. 42 is a block diagram illustrating a voice recognition image feedback device according to still another embodiment of the invention; and
FIG. 43 is a flowchart illustrating a voice recognition image feedback providing system according to a twenty third embodiment of the invention.

### DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The invention relates to a system and a method of providing image feedback to a location of a user or a user peripheral location area when user's voice is recognized. Here, the user peripheral location area means a peripheral area of a point at which the user locates.

That is, the system of the invention may provide an image corresponding to inputted command or request to the user peripheral location area when the user inputs a specific command or the request through his voice. For example, the image may be provided to the user through beam projection.

Accordingly, the system of the invention may provide various and convenient service to the user through image feedback, unlike a system for providing only sound feedback.

On the other hand, the image may be two-dimensional image, three-dimensional image, hologram, etc.

Hereinafter, embodiments of the invention will be described in detail with reference to accompanying drawings. It is assumed that the image is outputted through a beam projection for convenience of description, but various methods not the beam projection may be used as long as they can provide the image.

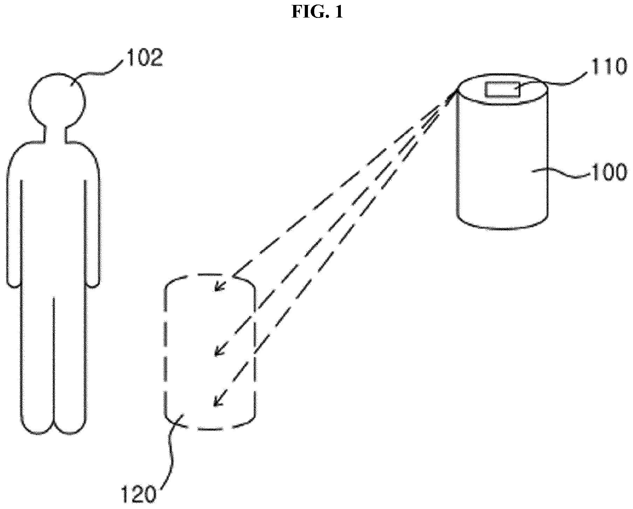

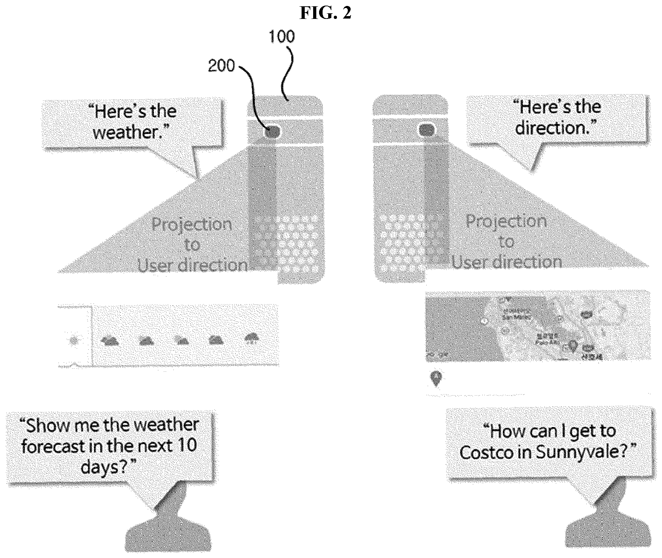

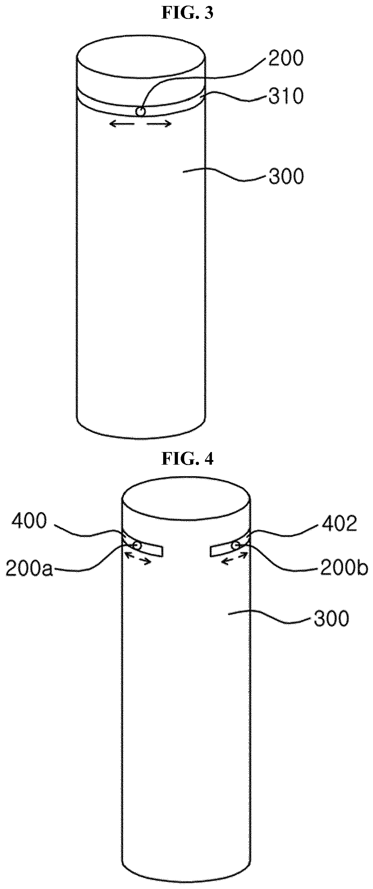

FIG. 1 is a view illustrating a voice recognition image feedback providing system according to a first embodiment of the invention, FIG. 2 is a view illustrating a process of providing image feedback according to one embodiment of the invention, and FIG. 3 to FIG. 5 are views illustrating structure of an voice recognition image feedback device according to one embodiment of the invention.

In FIG. 1, a voice recognition image feedback device 100 of the present embodiment may exist in a building such as for example a house, and include a display device 110 for information display or user's touch input, etc. The display device 110 is not essential element.

If a user 102 inputs a voice, the voice recognition image feedback device 100 recognizes the voice of the user 102, and extracts user's command, request or wish included in the voice by analyzing the voice.

For example, if the user 102 inputs a voice "please show weather for next 10 days" or "let me know how to go to costco in Sunnyvale region", the voice recognition image feedback device 100 may output an image, which shows weather for 10 days or how to go to costco, to a user peripheral location area 120.

For example, the voice recognition image feedback device 100 may include a beam projector 200 for providing the image, and may beam-project the image corresponding to the inputted voice to the user peripheral location area 120.

Here, the user peripheral location area 120 is not a point at which the user 102 locates, but means a peripheral area of the point at which the user 102 locates.

For example, the user peripheral location area 120 may be an area in a range of a specific radius. e.g. 3m radius based on the point at which the user 102 locates, so that the user 102 can see visibly the image. This is because it is inconvenient for the user 102 to see the image if the user peripheral location area 120 is very close or far to the point at which the user 102 locates. Of course, this means that at least part of the image exists in a range of 3m radius, but whole of the image need not exist in a range of 3m radius.

The user peripheral location area 120 may correspond to a front, a rear, a side or a top of the user 102, but may be a front area of the point at which the user 102 locates if user's convenience is considered. Here, the front area may correspond to a direction in which the voice is inputted to the voice recognition feedback device 100.

Additionally, the user peripheral location area 120 may be a floor, a ceiling, a wall and so on, but it is efficient that the user peripheral location area 120 is the floor or the wall because a place which user can see most conveniently is the floor or the wall.

Accordingly, the user 102 may obtain desired information through the image shown on the user peripheral location area 120.

It is sufficient that the user peripheral location area 120 is an area in which the user 102 can well see visibly the image, and size or shape of the user peripheral location area 120 is not limited. However, the image may be set to have size well seen visibly by the user 102 considering resolution, etc.

Of course, the system of the invention does not exclude an area at which the user 102 locates. However, it is difficult for the user 102 to see properly the image if the image is outputted on the area at which the user 102 locates. Accordingly, it is efficient that the image is provided to the user peripheral location area 120 not the area at which the user 102 locates.

On the other hand, the voice recognition image feedback device 100 may provide together a sound with the image when image feedback is provided to the user 102.

If only sound feedback is provided, it is difficult for the user 102 to figure out desired information and the user 102 can't enjoy various services. However, the voice recognition image feedback providing system of the invention provides information or other service desired by the user 102 to the user 102 through the image, and thus the user 102 may figure out easily desired information and enjoy various services.

Briefly, the voice recognition image feedback device 100 of the invention may recognize the user's voice and output the image corresponding to the recognized voice to the user peripheral location area 120.

To perform this function, the voice recognition image feedback device 100 may include a microphone, a sound feedback unit for recognizing the voice, a user location tracking unit, e.g. a camera and an image output device 200 as an image feedback unit, e.g. a beam projector.

Hereinafter, the user location tracking device for tracking a location of the user 102 to provide the image will be described.

In one embodiment, the user location tracking device may search a direction of the recognized voice and detect a distance between the voice recognition image feedback device 100 and the user 102 by analyzing magnitude of the recognized voice in the searched direction. That is, the user location tracking device may track the location of the user 102 based on only the recognized voice. However, this location tracking method may be low in accuracy.

In another embodiment, the user location tracking device may further include a picture photographing device (for example, a camera) so as to track accurately the location of the user 102. Particularly, the user location tracking device may locate the camera in a direction of the voice inputted to the voice recognition image feedback device and track accurately the location of the user 102 by obtaining a picture through the camera.

For example, the user location tracking device may extract an object through various techniques including a boundary area analysis using change of pixels in the photographed image, etc., and determine a position at which the extracted object locates as the location of the user 102.

For another example, in the event that the image includes plural objects, the user location tracking device may remove an object not person of the objects and determine an object most matched in the direction of the voice inputted to the voice recognition image feedback device of remaining objects (persons) as the location of the user 102. In this case, the other objects (for example, TV) except the object corresponding to the location of the user 102 are removed, i.e. noise is removed. Here, the object corresponding to the person means an object corresponding to human figure.

For still another example, in the event that the image includes plural objects, the user location tracking device may determine a location of an object which locates on a distance corresponding to magnitude of the voice of objects corresponding to human as the location of the user 102. In the event that objects exist on the distance corresponding to the magnitude of the voice, the user location tracking device may determine a location of an object 102 most matched in the direction of voice inputted to the voice recognition image feedback device as the location of the user or determine any object as the location of the user 102.

That is, the voice recognition image feedback device may track (detect) accurately the location of the user 102 through the voice and the picture.

To obtain the picture of the user, the user location tracking device should rotate or plural user location tracking devices should be installed to the voice recognition image feedback device 100.

Particularly, since the user 102 locates around the voice recognition image feedback device 100 and the voice recognition image feedback device 100 is fixedly installed, the user location tracking device should be installed to be rotated or plural user location tracking devices should fixedly installed at different locations, to detect the location of the user 102.

For example, a guide for rotating the user location tracking device may be formed on a body of the voice recognition feedback device 100, and the user location tracking device may rotate along the guide. The user location tracking device may have itself rotatable structure.

For another example, four user location tracking devices may be installed on the voice recognition image feedback device in an interval of 90°.

Hereinafter, the image feedback unit for outputting the image will be described in detail.

Since the user 102 may exist at various positions, the image feedback unit should be rotated or plural image feedback units should be installed in an interval of for example 90°.

In one embodiment, the beam projector 200 as the image feedback unit may be installed with rotatable structure on a body 300 of the voice recognition image feedback device 100.

Particularly, a circular guide 310 may be formed along circumference of a body 300, and the beam projector 200 may shift along the guide. That is, the beam projector 200 can rotate by 360° along the guide 302. Of course, the beam projector 200 may rotate itself.

In another embodiment, a first guide 400 may be formed on a part of the body 300, a second guide 402 may be formed on another part of the body 300, and beam projectors 200a and 200b may be respectively formed on the guides 400 and 402, as shown in FIG. 4. Here, the guides 400 and 402 may be formed along circumference of the body 300 so that the beam projectors 200a and 200b can rotate in every direction. Of course, FIG. 4 shows two guides, but three or more guides may be formed.

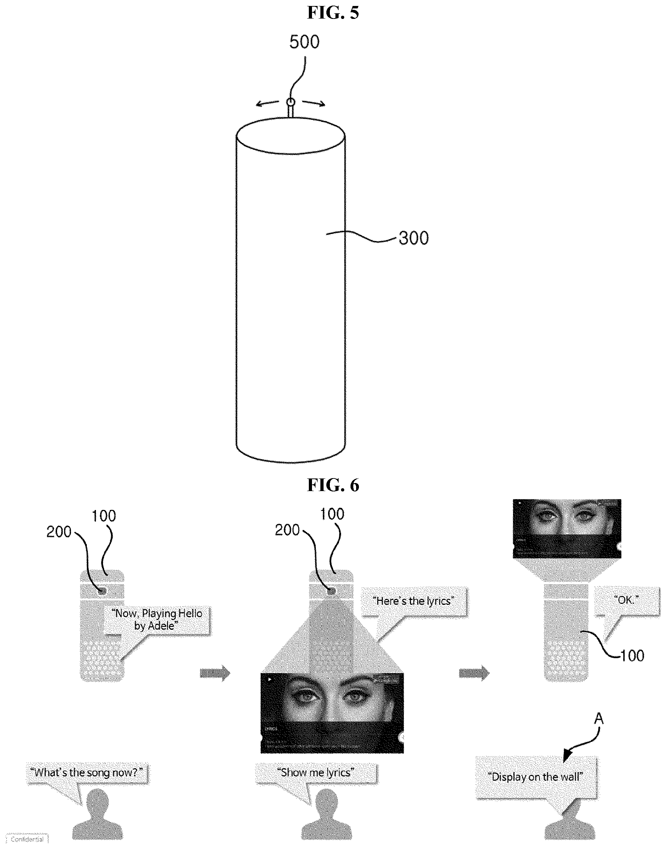

In still another embodiment, a beam projector 500 may be formed outside the body 300 as shown in FIG. 5. Of course, a guide may be formed on the body 300 so that the projector 500 can rotate along circumference of the body 300.

That is, the beam projector may be installed on the voice recognition image feedback device 100 or outside the voice recognition image feedback device 100 as long as the beam projector can rotate.

In still another embodiment, beam projectors may be formed all around the body 300 of the voice recognition image feedback device 100. In this case, the beam projectors may output images to predetermined areas with be fixed.

Of course, the beam projector may rotate with be fixed, and thus it may output freely the image in a desired direction in the predetermined area.

FIG. 6 is a view illustrating a voice recognition image feedback providing system according to a second embodiment of the invention.

In FIG. 6, the voice recognition image feedback device 100 may include a beam projector 200 as the image feedback unit, and provide image feedback according to the user's voice.

If a user designates a location at which the image feedback is to be provided by a voice, the voice recognition image feedback device 100 may provide the image feedback to the location designated by the user not a user peripheral location area or a location preset to the voice recognition image feedback device 100 (location set considering a distance, an angle or a definition, etc.).

For example, if the user speaks "please display on a wall", the voice recognition image feedback device 100 may output an image to the wall not the user peripheral location area.

In one embodiment, the voice recognition image feedback device 100 may analyze user's voice through natural language analysis and detect a location designated by the user depending on the analysis result. Here, the location designated by the user may be a specified location or include several locations.

In the event that the location designated by the user is the specified position, for example the user speaks "a wall on which a television is installed in a living room", the voice recognition image feedback device 100 may provide the image feedback to the specified wall. In this case, it is unnecessary to detect user's location.

In the event that the location designated by the user includes several locations, for example several walls exist in the living room, the voice recognition image feedback device 100 may provide the image feedback to a wall nearest to the user. In this case, the user's location should be detected.

Briefly, the voice recognition image feedback device 100 of the present embodiment may provide the image feedback to the designated location when the location at which the image is to be feedback is designated in the user's voice.

In above description, basic operation of the voice recognition image feedback system is described. Hereinafter, operation of various voice recognition image feedback systems will be described in detail with reference to accompanying drawings. However, numerical number of elements will be omitted for convenience for description.

The image feedback may be provided to an area at which the user locates as well as the user peripheral location area. Since the user peripheral location area may be included in user location, a location at which the image feedback is provided will be referred to as the user location in following drawings.

Hereinafter, various embodiments in which image feedback is provided according to voice recognition will be firstly described in detail.

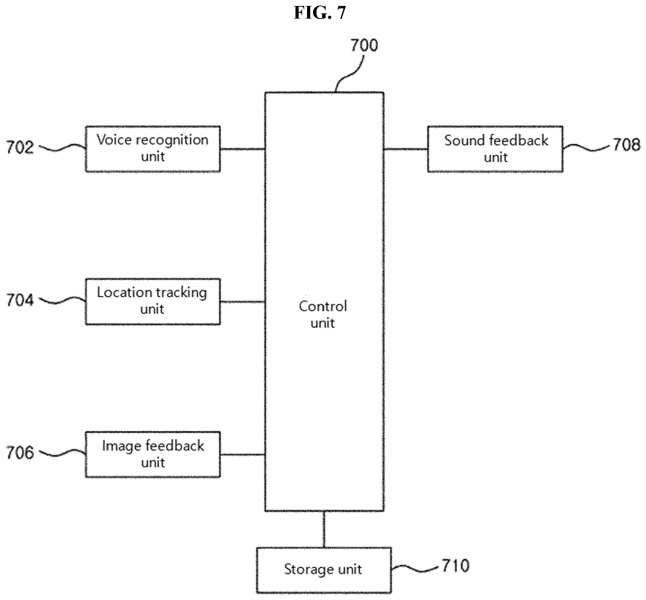

FIG. 7 is a block diagram illustrating a voice recognition image feedback device according to one embodiment of the invention.

In FIG. 7, the voice recognition image feedback device of the present embodiment may include a control unit 700, a voice recognition unit 702, a location tracking unit 704, an image feedback unit 706, a sound feedback unit 708 and a storage unit 710.

The voice recognition unit 702 recognizes user's voice and detect user's request in the voice according to analysis of the voice. The voice recognition unit 702 takes charge of function related to voice recognition.

The location tracking unit 704 may track user's location in a direction of the voice inputted to the voice recognition image feedback device. The location tracking unit 704 is in charge of function related to location tracking.

The image feedback unit 706 may provide an image corresponding to the voice to the user. For example, the image feedback unit 706 may be a beam projector. The image feedback unit 706 takes charge of function related to image provision.

The sound feedback unit 708 may provide a sound (voice) corresponding to the recognized voice to the user. For example, the sound feedback unit 708 may include a speaker. This sound feedback unit 708 is in charge of function related to sound provision.

The storage unit 710 stores various kinds of information such as the voice, the image and so on.

The control unit 700 controls the operation of elements in the voice recognition image feedback device.

The voice recognition image feedback device may further include an environment setting unit, etc., which is not shown.

The environment setting unit may set environment of the voice recognition image feedback device, for example register the user, the user's voice and so on.

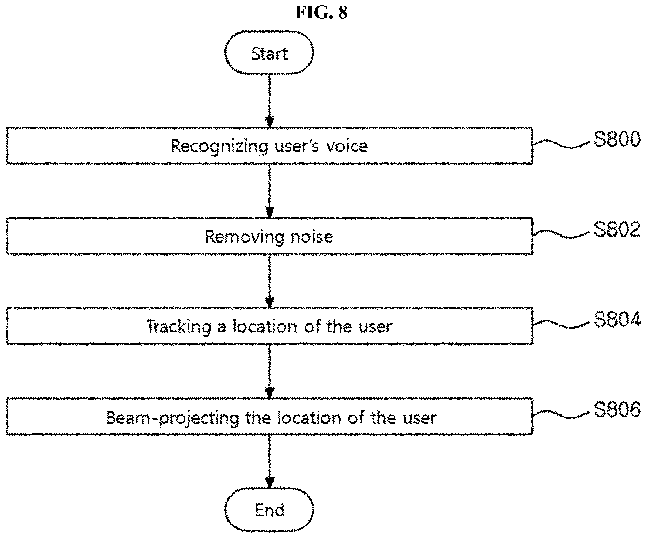

FIG. 8 is a flowchart illustrating operation of a voice recognition image feedback providing system according to a third embodiment of the invention.

In FIG. 8, in a step of S800, the voice recognition image feedback device recognizes user's voice. For example, the voice recognition image feedback device extracts natural languages from the user's voice and detects command, request, etc. of the user by analyzing the extracted natural languages.

In a step of S802, the voice recognition image feedback device removes noise from the recognized voice.

For example, when voices of multiple users are received, the voice recognition image feedback device may recognize a voice received most loudly as the user's voice and remove the other voice by filtering the other voice.

For another example, when a sound is received from another device such as a television, etc., the voice recognition image feedback device may remove machine sound by filtering the machine sound and recognize only user's voice.

Of course, the voice recognition feedback device may recognize a voice received most loudly of various sounds as the user's voice.

That is, noise means every sound except the user's voice and is filtered.

In a step of S804, the voice recognition image feedback device tracks the location of the user. For example, the voice recognition image feedback device may track the location of the user in a direction in which the user's voice is inputted.

That is, the voice recognition image feedback device may track the location of the user based on magnitude of the voice in a direction where the voice is inputted.

In another embodiment, the voice recognition image feedback device may track the location of the user by using the user location tracking device under the condition of locating the user location tracking device in a direction in which the user's voice is inputted.

Here, the direction may be a direction in which a voice is inputted with most loudly intensity. Voices are inputted to a microphone of the voice recognition image feedback device in various directions when the user outputs his voice, and thus the voice recognition image feedback device may determine the direction of the voice inputted most loudly as the direction where the voice is inputted.

Subsequently, the voice recognition image feedback device may output an image corresponding to the voice to the user peripheral location area corresponding to the tracked location of the user, e.g. beam-project. Of course, corresponding sound (sound feedback) as well as the image may be outputted together.

Shortly, the voice recognition image feedback device of the present embodiment may filter the other sound except the user's voice of various sounds as noise, and then provide the image corresponding to the user's voice to the user peripheral location area.

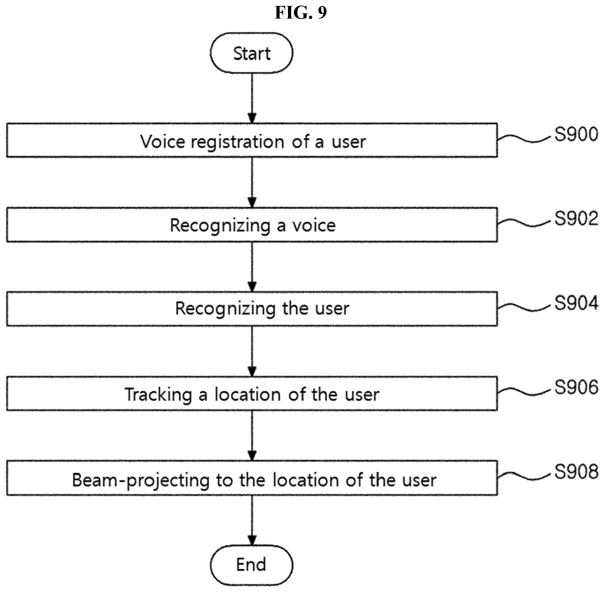

FIG. 9 is a flowchart illustrating a voice recognition image feedback providing system according to a fourth embodiment of the invention.

In FIG. 9, in a step of S900, user's voice may be pre-registered in the voice recognition image feedback device or an external computing device (for example, a cloud server).

Chance of using the voice recognition image feedback device in a home or a company is generally high, and thus users' voices possible to use the voice recognition image feedback device or the users may be pre-registered.

In steps of S902 and S904, the voice recognition image feedback device may recognize the voice of the user from many people. For example, in the event that voices of plural people are inputted to the voice recognition image feedback device, the voice recognition image feedback device may search whether pre-registered voice exists in the inputted voices, and recognize corresponding voice as the user's voice when the pre-registered voice exists. Here, comparison of the voices may be performed by comparing waveforms of voice signals.

On the other hand, in the event that two or more pre-registered voices exist in the inputted voices, the voice recognition image feedback device may determine a voice inputted most loudly of the pre-registered voices as the user's voice.

In another embodiment, in the event that a user not user's voice is pre-registered, the voice recognition image feedback device may search whether the pre-registered user exists in users inputting voices and determine a voice of the pre-registered user as the user's voice.

For example, if the user inputs a voice "I am cheolsu, please show weather", the voice recognition image feedback device may detect whether "cheolsu is the pre-registered user and determine the inputted voice as the user's voice when the cheolsu is the pre-registered user.

In a step of S906, the voice recognition image feedback device may track a location of the user in a direction in which the voice is inputted.

In a step of S908, the voice recognition image feedback device may provide an image to a user peripheral location area corresponding to the tracked location of the user.

In brief, the voice recognition image feedback providing system of the present embodiment may pre-register the voice or the user, determine a voice of the user based on the registration, and provide the image corresponding to the determined voice to the user. Accordingly, the voice recognition image feedback providing system may prevent other person from using it.

In another embodiment, an eye sensing method may be used to recognize one of plural people. Possibility of a user seeing the voice recognition image feedback device is high when the user provides a command through his voice. Accordingly, the voice recognition image feedback device may detect eyes of users by using for example a camera, and provide an image to a user of seeing the voice recognition image feedback device.

For example, the voice recognition image feedback device may obtain a picture through the camera in a direction where the voice is inputted, recognize users in the obtained picture, extract eyes of the recognized users via various algorithms, and detect a user of seeing directly the voice recognition image feedback device.

On the other hand, if plural users see the voice recognition image feedback device, the voice recognition image feedback device may determine a user of seeing most directly the voice recognition image feedback device as a user to which the image is to be provided, or provide sequentially or simultaneously the image to every user which see the voice recognition image feedback device.

For example, the voice recognition image feedback device may provide sequentially the image to the users through a method of rotating the image feedback unit or moving upward and downward the image feedback unit having a hinge structure.

For another example, the voice recognition image feedback device may provide simultaneously the same image to the users through image feedback units when the voice recognition image feedback device includes plural image feedback units.

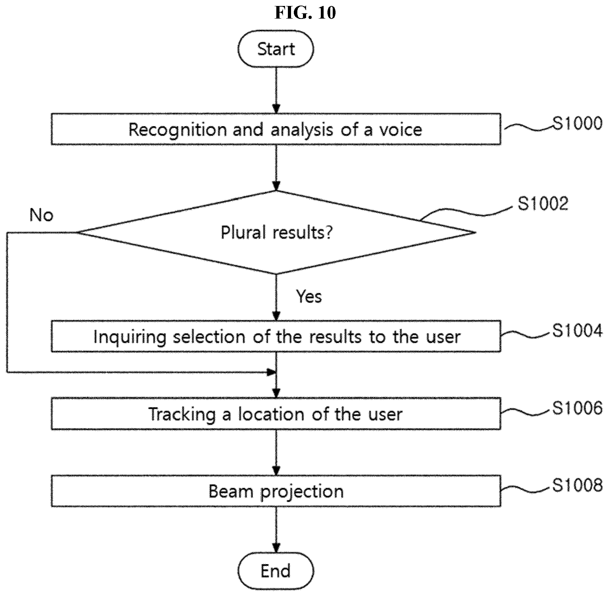

FIG. 10 is a flowchart illustrating a voice recognition image feedback providing system according to a fifth embodiment of the invention.

In FIG. 10, in a step of S1000, a voice recognition image feedback device may recognize user's voice and analyze the recognized voice.

In a step of S1002, the voice recognition image feedback unit discriminates through the analysis whether the voice includes plural results (contents).

For example, a user may input his voice "please show school album" to the voice recognition image feedback device. In this case, the school album includes an elementary school album, a middle school album, a high school album or a college album. That is, plural results can be provided to the user.

Accordingly, the voice recognition image feedback device discriminates whether the recognized voice includes plural results.

If the recognized voice includes only one result, i.e. user's request is clear, the voice recognition image feedback device may track a location of the user in a step of S1006, and provide image feedback to the tracked location in a step of S1008.

In a step of S1004, it is difficult to determine a result to be provided when the recognized voice includes plural results. Accordingly, the voice recognition image feedback device may inquire selection of the results to the user.

For example, the voice recognition image feedback device may request through a sound or an image to select desired result from plural results. The user may select desired result through a voice, or select desired result through a display device.

If the user selects desired result, the voice recognition image feedback device may track a location of the user in a direction where the voice is inputted in a step of S 1006, and provide an image corresponding to the selected result to the tracked location in a step of S 1008.

In short, the voice recognition image feedback providing system of the present embodiment may request selection of a result to the user and then provide the image corresponding to the selected result to the user, when the user's voice including plural results is inputted.

A method of providing a service when the user's voice includes plural results is mentioned in above description, but contents (request) in accordance with the user's voice can't be recognized. In this case, the voice recognition image feedback device may request to input again clear contents because it is difficult to recognize a result desired by the user.

Here, a case that the voice recognition image feedback device can't recognize contents of the voice includes a case that the user inputs a voice unrelated to provision of the image, e.g. a voice "play with me, cheolsu", a case that a word related to request does not exist in a dictionary, e.g. "cheolsu, ddadada", a case that request is unclear, e.g. "do you want to show the album?, don't ?", a case that the voice includes a word registered as forbidden word in the voice recognition image feedback device, or a case that request in the voice is request incapable of be providing by the voice recognition image feedback device.

That is, the voice recognition image feedback providing system of the present embodiment may request new input to the user when the user's voice includes plural results or the voice recognition feedback device can't recognize contents in the voice. The new input may be selection of results or input of new voice.

The user selects specific result in above description, but the desired result may be pre-registered to the voice recognition image feedback device. As a result, an image including the specific result may be provided to the user though the user does not select the specific result.

Particularly, the voice recognition image feedback device may register in advance the desired result in its memory or in an external computing device. For example, the voice recognition image feedback device may register an album by matching high school album with a word "album".

That is, the voice recognition image feedback device may pre-register desired result about specific word, phrase or sentence. The registration may be performed through user's voice or by controlling directly a display device.

Accordingly, the voice recognition image feedback device may recognize the high school album as a result of a word "album" when the user inputs for example a voice "please show school album".

Subsequently, the voice recognition image feedback device may track a location of the user in a direction where the voice is inputted, and output an image corresponding to the voice, i.e. an image including desired result to the user peripheral location area.

On the other hand, registration of the result may be performed for each of the users. For example, a user A may register "album" by matching a word "album" with high school album, and a user B may register "album" by matching the word "album" with college album.

That is, the same word may be matched with different result for each of the users. In this case, the voice recognition image feedback device may recognize the user corresponding to the voice and provide a result corresponding to the recognized user to the user.

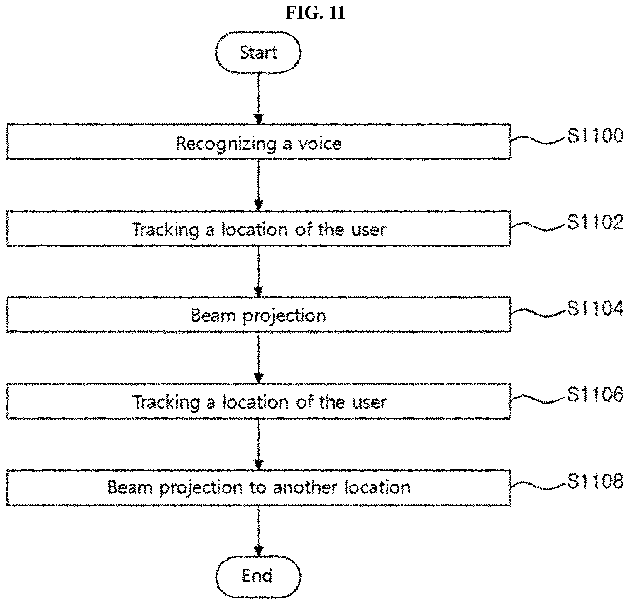

FIG. 11 is a flowchart illustrating a voice recognition image feedback providing system according to a sixth embodiment of the invention.

In FIG. 11, in a step of S1100, the voice recognition image feedback device of the present embodiment recognizes user's voice.

In a step of S1102, the voice recognition image feedback device tracks a location of the user in a direction where the voice is inputted.

In a step of S1104, the voice recognition image feedback device provides image feedback to a user peripheral location area corresponding to the tracked location of the user.

In a step of S1106, the voice recognition image feedback device tracks again the location of the user.

The voice recognition image feedback device need not to track again the location of the user if the user stays continuously on a location at which the voice is outputted, but it should track again the location of the user if the user moves to different location, to provide image feedback to a peripheral area of a point at which the user locates.

Accordingly, the voice recognition image feedback device may track continuously the location of the user.

Here, the tracking may be performed through analysis of the voice of the user inputted continuously. That is, if the user moves and outputs his voice, the voice is inputted to the voice recognition image feedback device in a direction where the user moves. Accordingly, the voice recognition image feedback device may track in real time the location of the user by tracking continuously the user's voice. Of course, location tracking of the user may be performed by photographing a picture through a camera.

In a step of S1108, the voice recognition image feedback device provides image feedback to other location when the user moves to the other location.

Briefly, the voice recognition image feedback providing system of the present embodiment may track continuously the location of the user and provide the image feedback to the user peripheral location area corresponding to present location of the user. As a result, the image is provided depending on moving of the user.

The location of the user is again tracked after the step S1104 is performed, but it may be again tracked before the step S1104.

The user location tracking device may track continuously the location of the user until provision of the image feedback is finished after the voice is recognized. As a result, the image feedback may be efficiently provided to the user irrespective of the location of the user.

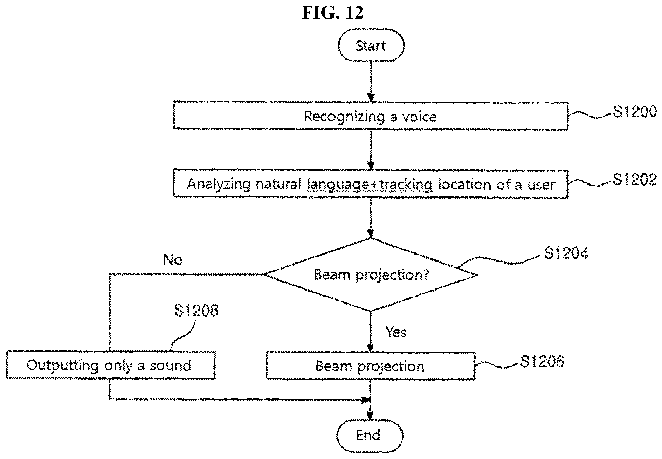

FIG. 12 is a flowchart illustrating operation of a voice recognition image feedback providing system according to a seventh embodiment of the invention.

In FIG. 12, in a step of S1200, the voice recognition image feedback device of the present embodiment recognizes user's voice.

In a step of S1202, the voice recognition image feedback device performs natural language analysis about the recognized voice, and tracks a location of the user in a direction where the voice is inputted.

In a step of S1204, the voice recognition image feedback device discriminates through the analysis whether or not it provides image feedback.

Cases are divided into case that it is necessary to provide an image (image feedback) and case that it is sufficient to provide only sound (sound feedback) without provision of the image, depending on analysis of the natural language. Accordingly, the voice recognition image feedback device discriminates through the analysis of the natural language whether or not it is necessary to provide the image.

The discrimination may be performed based on pre-registered word, phrase or sentence, based on a number of words included in a result to be provided according to the voice, based on whether or not the image corresponding to the voice exists, or based on whether request by the user is related to the image.

In a step of S1208, the voice recognition feedback device may output only sound without the image when it is determined that the image need not to be provided.

For example, if the user inputs a voice including contents that he wants to know today weather, the voice recognition image feedback device may determine that it can sufficiently provide a result desired by the user to the user through only sound output, and provide information concerning today weather through the sound.

For another example, the voice recognition image feedback device may output only corresponding sound when a number of words included in the result corresponding to the voice is for example 5000 or less or the image corresponding to the voice does not exist.

In a step of S1206, the voice recognition image feedback device may provide image feedback when it is determined that it is necessary to provide the image. Of course, sound output may be provided together with the image feedback.

For example, if the user inputs a voice including contents that he wants to know weekly weather, the voice recognition image feedback device may determine that it is not sufficient to provide information concerning the weekly weather through only sound output and output the information through the image.

For another example, the voice recognition image feedback device may output corresponding image when a number of words included in the result corresponding to the voice is higher than 5000.

For still another example, the voice recognition image feedback device may provide corresponding image to the user when the user inputs a voice "please display a movie", i.e. it is necessary to provide the image according to voice input.

Briefly, the voice recognition image feedback device of the present embodiment may analyze the user's voice and provide selectively the sound feedback or the image feedback depending on the analyzing.

In this case, the voice recognition image feedback device may provide automatically the sound feedback or the image feedback through analysis of the voice.

Of course, the voice recognition image feedback device may provide related information through a method selected by the user when the user selects definitely through the voice or presets whether it provides the sound feedback or the image feedback.

For example, the voice recognition image feedback device may provide information concerning today weather to the user through the image when the user inputs the voice including contents that it provides today weather through the image.

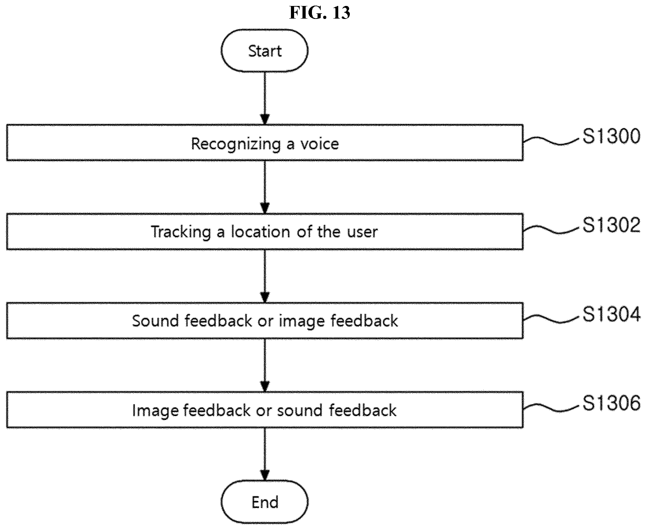

FIG. 13 is a flowchart illustrating operation of a voice recognition image feedback providing system according to an eighth embodiment of the invention.

In FIG. 13, in a step of S1300, the voice recognition image feedback device of the present embodiment recognizes user's voice.

In a step of S1302, the voice recognition image feedback device tracks a location of the user in a direction where the voice is inputted.

In a step of S1304, the voice recognition image feedback device provides sound feedback or provides image feedback to a user peripheral location area corresponding to the tracked location of the user.

In a step of S1306, the voice recognition image feedback device provides the image feedback or the sound feedback.

In brief, the voice recognition image feedback device of the present embodiment may provide sequentially the image feedback after the sound feedback is provided, or provide sequentially the sound feedback after the image feedback is provided.

For example, weather may include today weather and weakly weather when the user inputs a voice "inform weather". In this case, the voice recognition image feedback device may provide weekly weather through the image feedback after providing today weather through the sound feedback.

Accordingly, the voice recognition image feedback device may provide properly information through the sound and the image though the user requests comprehensively the information.

The request of comprehensive information may include a case that sound and image corresponding to the request exist, a case that at least one of results is provided through sound feedback and the other result is provided through image feedback when the results are provided according to the request, or a case that both of the sound feedback and the image feedback are provided according as the discrimination in FIG. 7 is applied.

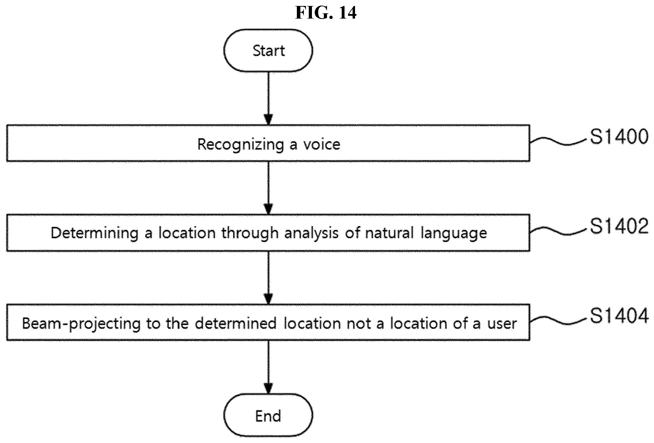

FIG. 14 is a flowchart illustrating operation of a voice recognition image feedback providing system according to a ninth embodiment of the invention.

In FIG. 14, in a step of S1400, a voice recognition image feedback device recognizes user's voice.

In a step of S1402, the voice recognition image feedback device determines a location at which an image is provided, through voice analysis, e.g. analysis of natural language included in the voice. Here, the location may be another location not the location of the user. If the user designates his location, the designated location may be the location of the user.

For example, in the event that the user inputs a voice "please display weather on a wall", the voice recognition image feedback device may recognize natural language "wall" and determine the wall as the location at which the image is provided.

For another example, if the user inputs a voice "please show pictures to a friend adjacent to me", the voice recognition image feedback device may recognize a natural language "friend" and determine an area at which the friend locates as the location at which the image is to be provided.

In still another example, if the user inputs a voice "please show photographs to one of friends", the voice recognition image feedback device may recognize a phrase "one of the friends", select optionally one of the friends and determine a location at which the selected friend locates as the location at which the image is to be provided.

In view of elements for location determination, the voice recognition image feedback device may include a word extracting unit, a word selection unit and a location determination unit, to analyzing the voice.

The word extracting unit extracts words included in the voice.

The word selection unit removes the other word except a word (for example, wall, friend, floor) related to a location from the extracted words. Here, the word related to the location may be pre-registered to the voice recognition image feedback device.

The location determination unit may determine the location at which the image is to be provided, through the word related to the location and combination of the word and a word, a phrase or a sentence.

For example, if the user inputs a voice "cheolsu sits on a living room floor, and please display weather on a wall", the location determination unit may recognize that the living room floor is not a location at which the image is to be provided through combination of "living room" and "floor" selected by the word selection unit and a sentence "sits on" related to the living room and the floor, and recognize that the wall is the location at which the image is to be provided through combination of "wall" selected by the word selection unit and a phrase "display" related to the wall. Accordingly, the voice recognition image feedback device may determine the wall as the location at which the image is to be provided.

In a step of S1404, the voice recognition image feedback device may provide image feedback to the determined location.

In brief, the voice recognition image feedback device of the present embodiment may provide the image feedback to the location designated by the user through the voice, e.g. another location not the location of the user, through the user's voice.

Hereinafter, embodiments related to a power operation of the voice recognition image feedback device will be described in detail with reference to accompanying drawings.

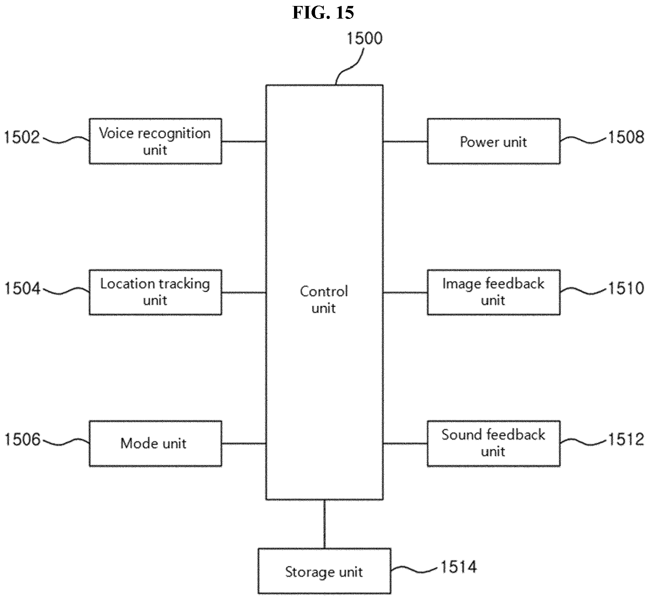

FIG. 15 is a block diagram illustrating a voice recognition image feedback device according to another embodiment of the invention.

In FIG. 15, the voice recognition image feedback device of the present embodiment may include a control unit 1500, a voice recognition unit 1502, a location tracking unit 1504, a mode unit 1506, a power unit 1508, an image feedback unit 1510, a sound feedback unit 1512 and a storage unit 1514.

The voice recognition unit 1502 recognizes user's voice and detects request of the user included in the voice by analyzing the voice. The voice recognition unit 1502 is in charge of function related to voice recognition.

The location tracking unit 1504 may track a location of the user in a direction where the voice is inputted to the voice recognition image feedback device. The location tracking unit 1504 takes charge of function related to location tracking.

The mode unit 1506 manages every function related to modes including a sleep mode, an active mode, a call mode and so on. Particularly, the mode unit 1506 may control a mode for power control.

The power mode 1508 manages power supplying to elements of the voice recognition image feedback device.

The image feedback unit 1510 may provide an image corresponding to the voice to the user. The image feedback unit 1510 is in charge of function related to image provision.

The sound feedback unit may provide a sound (voice) corresponding to the recognized voice to the user. For example, the sound feedback unit 1512 may include a speaker. The sound feedback unit 1512 takes charge of function related to sound provision.

The storage unit 1514 stores various kinds of information such as the voice, the image and so on.

The control unit 1500 controls operation of elements in the voice recognition image feedback device.

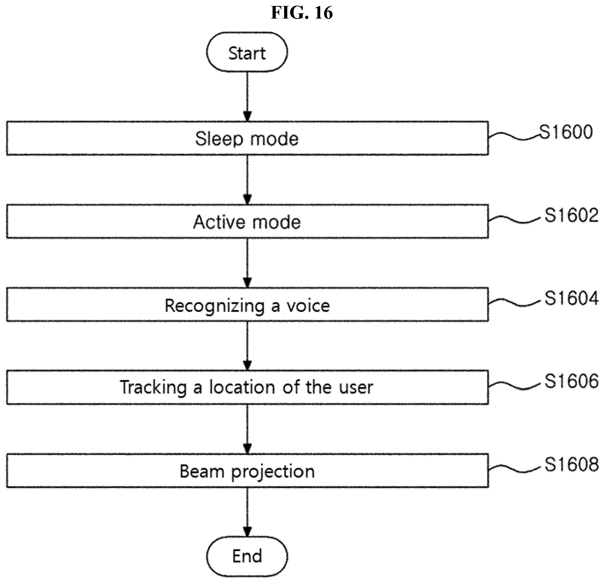

FIG. 16 is a flowchart illustrating operation of a voice recognition image feedback providing system according to a tenth embodiment of the invention.

In FIG. 16, in a step of S1600, a voice recognition image feedback device of the present embodiment senses whether a person exist at its surroundings, in a sleep mode.

Here, in the sleep mode, the other elements except a sensor (for example, a human body sensor or a moving sensor) for sensing the person and a part of a processor for managing the sensor are off state.

Since it is unnecessary to turn on the voice recognition image feedback device to save energy if a user inputting his voice does not exist, the voice recognition image feedback device is usually in the sleep mode.

In a step of S1602, the voice recognition image feedback device is changed from the sleep mode to an active mode, i.e. is activated when the person is sensed. That is, every element of the voice recognition image feedback device may be turned on so that it can recognize the voice and provide the image feedback.

In another embodiment, elements related to voice recognition of elements of the voice recognition image feedback device are turned on, but elements related to the image feedback is off state or in a standby mode. The elements related to the image feedback may be turned on when the user's voice is recognized.

In a step of S1604, the voice recognition image feedback device recognizes the user's voice.

In a step of S1606, the voice recognition image feedback device tracks a location of the user in a direction where the voice is inputted.

In a step of S1608, the voice recognition image feedback device provides the image feedback to the user peripheral location area corresponding to the tracked location of the user.

In short, the voice recognition image feedback device of the present embodiment may be in the sleep mode before the user is sensed and be changed to the active mode when the user is sensed. As a result, unnecessary consumption of energy may be prevented.

In another embodiment, the voice recognition image feedback device may be changed from the sleep mode to the active mode when a specific device, for example a lighting device in a place where the voice recognition image feedback device exists is activated, the method of sensing the user not being used.

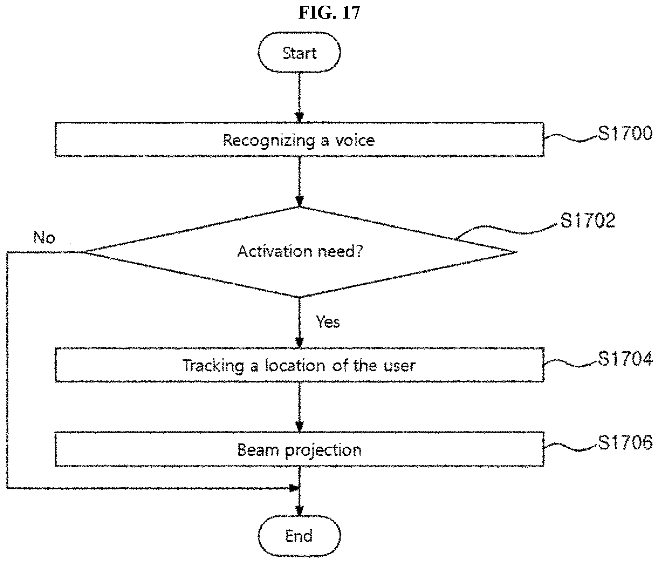

FIG. 17 is a flowchart illustrating operation of a voice recognition image feedback providing system according to an eleventh embodiment of the invention.

In FIG. 17, in a step of S1700, a voice recognition image feedback device of the present embodiment recognizes user's voice. Here, the other elements of the voice recognition image feedback device except elements related to the voice recognition may be off state, i.e. in a sleep mode.

In a step of S1702, the voice recognition image feedback device discriminates whether or not it activates the other elements.

For example, the voice recognition image feedback device discriminates whether or not the recognized voice is pre-registered voice. That is, the voice recognition image feedback device needs not to provide image feedback to every user, but it may provide the image feedback to only the pre-registered user.

Accordingly, it is efficient that the voice recognition image feedback device does not turn on the other elements when a voice of the pre-registered user is not sensed, but turns on the other elements only when the voice of the pre-registered user is sensed, so as to save energy.

If the recognized voice is not pre-registered voice, the voice recognition image feedback device keeps the sleep mode. That is, the other elements except the elements related to the voice recognition maintains off state.

In a step of S1704, if the recognized voice is the pre-registered voice, the other elements of the voice recognition image feedback device is turned on (active mode), i.e. a power is supplied to the other elements, and then the voice recognition image feedback device tracks a location of the user in a direction where the voice is inputted.

In a step of S1706, the voice recognition image feedback device provides image feedback to a user peripheral location area corresponding to the tracked location of the user.

Briefly, the voice recognition image feedback device of the present embodiment is not activated for every user, but is activated for only pre-registered user.

For example, if only family member is pre-registered to the voice recognition image feedback device, the other person except the family member can't operate the voice recognition image feedback device.

The voice recognition image feedback device may output information of the family member through image feedback. As a result, if the other person can activate the voice recognition image feedback device, the information of the family members may be leaked. Accordingly, the voice recognition image feedback device may be activated for only the pre-registered user to cut off the leak of the information.

In another embodiment, information concerning the other user except a user of which a voice is recognized of pre-registered users may not be provided to the user though the voice recognition image feedback device is activated. That is, private information may not be provided to the other users.

Of course, the voice recognition image feedback device may provide the other information except the private information to every pre-registered user through the image feedback.

Hereinafter, embodiments related to operation of the voice recognition image feedback device for sensing moving of the user will be described in detail with reference to accompanying drawings.

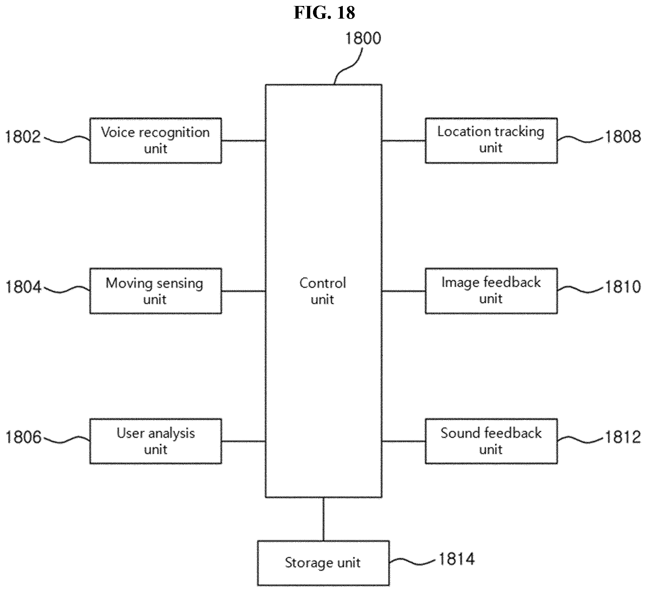

FIG. 18 is a block diagram illustrating a voice recognition image feedback device according to still another embodiment of the invention.

In FIG. 18, the voice recognition image feedback device of the present embodiment may include a control unit 1800, a voice recognition unit 1802, a moving sensing unit 1804, a user analysis unit 1806, a location tracking unit 1808, an image feedback unit 1810, a sound feedback unit 1812 and a storage unit 1814.

The voice recognition unit 1802 recognizes user's voice and detects request of the user included in the voice by analyzing the voice. The voice recognition unit 1802 takes charge of function related to voice recognition.

The moving sensing unit 1804 may sense moving of the user by using a moving sensor, for example sense hand moving of the user, etc.

The user analysis unit 1806 may detect intent or feeling of the user through the detected moving of the user. The detected intent or feeling may be used for determining a location at which an image is to be feedback, or size or color of the image, etc.

The location tracking unit 1808 may track the location of the user through a direction of the voice inputted to the voice recognition image feedback device or the moving of the user. The location tracking unit 1808 is in charge of function related to the location tracking.

The image feedback unit 1810 may provide the image corresponding to the voice to the user. The image feedback unit 1810 takes charge of function related to image provision.

The sound feedback unit 1812 may provide a sound (voice) corresponding to the recognized voice to the user. The sound feedback unit 1812 is in charge of function related to sound provision.

The storage unit 1814 stores various kinds of information such as the voice, the image and so on.

The control unit 1800 controls operation of elements in the voice recognition image feedback device.

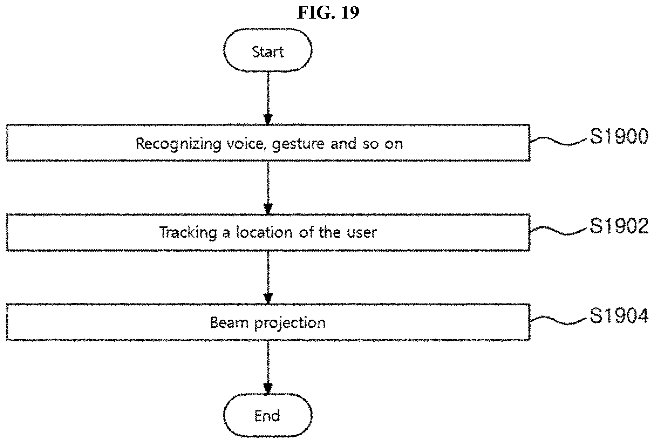

FIG. 19 is a flowchart illustrating operation of a voice recognition image feedback providing system according to a twelfth embodiment of the invention.

In FIG. 19, in a step of S1900, a voice recognition image feedback device of the present embodiment may recognize moving of the user such as gesture of the user, etc. as well as user's voice. Of course, the voice recognition image feedback device should include a moving sensor, e.g. a camera to sense the moving.

In a step of S1902, the voice recognition image feedback device may track a location of the user in a direction where the user's voice is inputted or a direction where the moving is sensed.

In a step of S1904, the voice recognition image feedback device may provide image feedback to a user peripheral location area corresponding to the tracked location of the user. Here, the image feedback may reflect the user's voice and the gesture.

For example, in the event that the user indicates his finger toward a wall but he does not refer the wall through the voice, the voice recognition image feedback device may provide the image feedback to the wall not the user peripheral location area.

For another example, in the event that the user draws big size of circle with his finger, the voice recognition image feedback device may provide the image in big size.

That is, the voice recognition image feedback device may provide the image feedback by reflecting the moving of the user as well as the voice. Accordingly, the voice recognition image feedback device may provide more plentifully various images to the user.

On the other hand, the moving of the user may be sensed after the voice is recognized, or be simultaneously sensed with recognition of the voice.

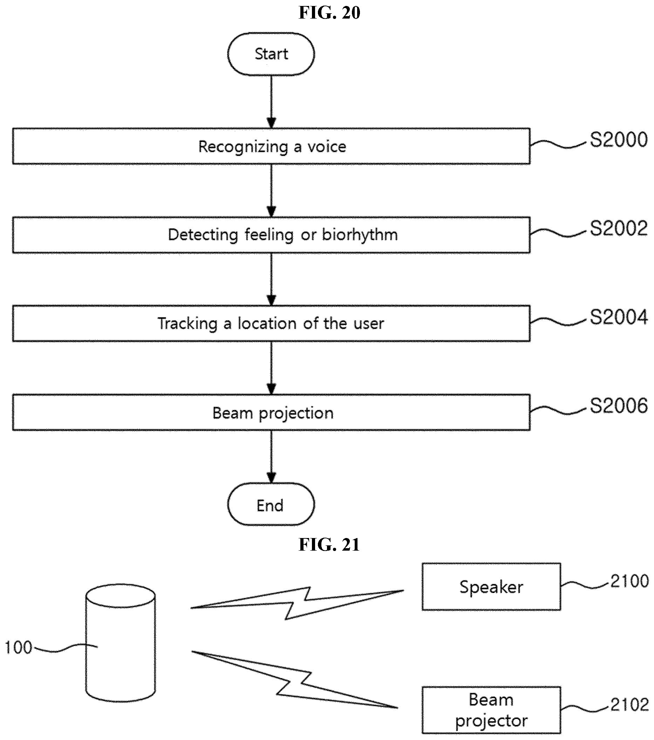

FIG. 20 is a flowchart illustrating operation of a voice recognition image feedback providing system according to a thirteenth embodiment of the invention.

In FIG. 20, in a step of S2000, a voice recognition image feedback device of the present embodiment recognizes user's voice.

In a step of S2002, the voice recognition image feedback device may detect feeling of the user, etc. through the recognized voice.

In one embodiment, the user analysis unit may include a voice analysis unit for analyzing a tone of the voice, a word for showing feeling included in the voice, etc. and a moving analysis unit for analyzing size of the moving of the user, moving for showing the feeling, etc.

For example, the user analysis unit may determine the feeling of the user as depression if the voice is subdued, and determine the feeling of the user as pleasure if the voice includes laughter "haha".

For another example, the user analysis unit may determine the feeling of the user as pleasure if it is sensed through the moving analysis of the user that the user is dancing, and determine the feeling of the user as sadness if the user is crying.

In another embodiment, the voice recognition image feedback device may figure out the feeling, biorhythm, etc. through the moving or birth date of the user, feeling inputted directly by the user, etc. as well as the recognized voice. Here, the biorhythm may be detected by activating internet site through the voice recognition image feedback device or an external device connected to the voice recognition image feedback device and inputting the birth date in the internet site.

In a step of S2004, the voice recognition image feedback device tracks a location of the user in a direction where the voice is inputted.

In a step of S2006, the voice recognition image feedback device provides image feedback to a user peripheral location area corresponding to the tracked location of the user. In this case, the image feedback may be provided by reflecting the feeling of the user, etc.

For example, the voice recognition image feedback device may provide brighter image to the user when it is determined through voice analysis of the user that the feeling of the user is pleasure. Of course, the voice recognition image feedback device may provide the image with bright and cheerful sound.

Whereas, the voice recognition image feedback device may provide darker image to the user when it is determined that the feeling of the user is sadness. Fundamentally, the image may be the same irrespective of pleasure and depression, except color or mood, etc.

Briefly, the voice recognition image feedback providing system of the present embodiment may provide information through the image or the image and the sound by reflecting the feeling of the user, etc. when the information in accordance with the user's voice is provided.

The voice recognition image feedback device provides the image to the user depending on request included in the voice in the above description, but it may provide the image to the user though the request does not exist.

Particularly, the voice recognition image feedback device may detect the feeling of the user through general voice of the user not a voice including specific request and provide the image where the detected feeling is reflected to the user.

In one embodiment, the voice recognition image feedback device may extract and analyze words in the voice and determine the voice as the general voice when the voice does not include the specific request.

In another embodiment, the voice recognition image feedback may determine the voice as the general voice when an input time of the voice is more than preset time. Possibility of inputting the voice by a time smaller than for example 30 seconds is high in the event that the user inputs the specific request to the voice recognition image feedback device. Accordingly, the voice recognition image feedback device may determine the inputted voice as the general voice when the voice is continuously inputted by a time of 30 seconds or more.

For example, possibility of inputting the voice by a time of 30 seconds or more is high in the event that the user is talking on the phone. Accordingly, the voice recognition image feedback device may determine the voice as the general voice, detect the feeling of the user through the voice, and provide automatically an image or a sound corresponding to the detected feeling.

That is, the voice recognition image feedback providing system may detect the feeling of the user through the voice of the user, etc. though the user does not request, and provide automatically proper image or voice to the user. Accordingly, the user may enjoy unexpected joy.

FIG. 21 is a view illustrating operation of a voice recognition image feedback providing system according to a fourteenth embodiment of the invention.

In FIG. 21, a speaker and an image output device (for example, a beam projector) is not included in the voice recognition image feedback device 100, and a speaker 2100 and a beam projector 2102 locate outside the voice recognition image feedback device 100.

Of course, the speaker 2100 and the beam projector 2102 may be connected to the voice recognition image feedback device 100 through wireless or wire communication.

The voice recognition image feedback device 100, the speaker 2100 and the beam projector 2102 are separated, but their operation is the same in previous embodiments, and thus any further description concerning the operation will be omitted.

Hereinafter, embodiments related to operation of the voice recognition image feedback device using the sound and the image will be described in detail with reference to accompanying drawings.

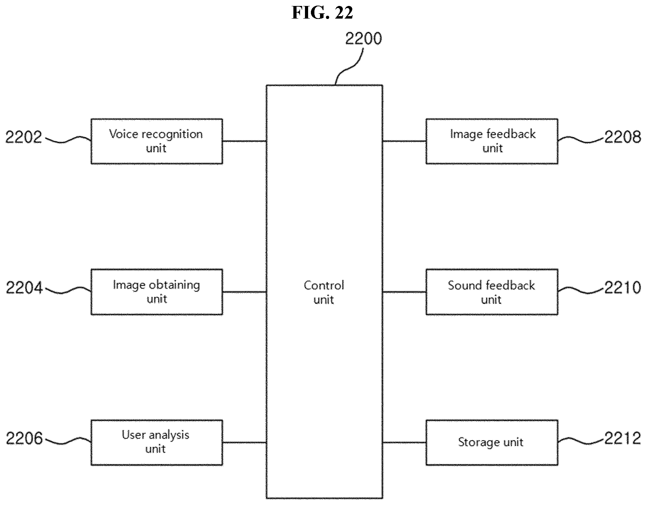

FIG. 22 is a block diagram illustrating a voice recognition image feedback device according to another embodiment of the invention.

In FIG. 22, the voice recognition image feedback device of the present embodiment may include a control unit 2200, a voice recognition unit 2202, an image obtaining unit 2204, a location tracking unit 2206, an image feedback unit 2208, a sound feedback unit 2210 and a storage unit 2212.

The voice recognition unit 2202 recognizes and analyzes user's voice and figures out user's request included in the voice. The voice recognition unit 2202 takes charge of function related to the voice recognition.

The image obtaining unit 2204 locates toward a direction where the voice is inputted to the voice recognition image feedback device and then obtains front image, and it is for example a camera. The obtained image may be used for determining the location of the user and removing noise.

In another embodiment, the image obtaining unit 2204 may not be included in the voice recognition image feedback device and be an external device. For example, the image obtaining unit 2204 may be a security camera in home. In this case, the voice recognition image feedback device may obtain desired image through the image obtaining unit 2204 while it is connected to the image obtaining unit 2204.

The location tracking unit 2206 may track the location of the user by using the voice and the image. The location tracking unit 2206 is in charge of function related to location tracking.

The image feedback unit 2208 may provide an image corresponding to the voice to the user. The image feedback unit 2208 takes charge of function related to image provision.

The sound feedback unit 2210 may provide a sound (voice) corresponding to the recognized voice to the user. The sound feedback unit 2210 is in charge of function related to the sound provision.

The storage unit 2212 stores various kinds of information such as the voice, the image, etc.

The control unit 2200 controls elements of the voice recognition image feedback device.

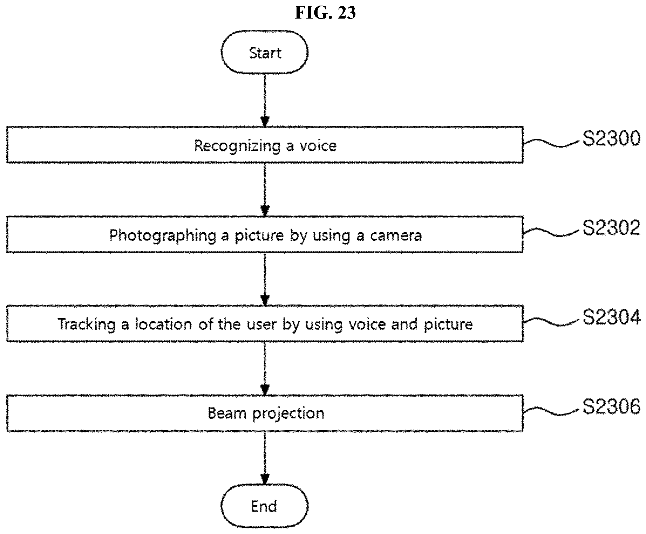

FIG. 23 is a flowchart illustrating operation of a voice recognition image feedback providing system according to a fifteenth embodiment of the invention.

In a step of S2300, a voice recognition image feedback device recognizes user's voice.

In a step of S2302, the voice recognition image feedback device photographs user's image in a direction of the recognized voice by using a user location tracking device (for example, a camera). Here, the user location tracking device may rotate.

In a step of S2304, the voice recognition image feedback device tracks the location of the user based on the voice and the image. Accordingly, the voice recognition image feedback device may track more accurately the location of the user compared to track the location of the user by using only the voice.

Of course, a process of filtering noise such as a voice of other person, a sound of thing, a sound of a television, etc. may be further performed while the location of the user is tracked. This method is efficient because the photographed image is used.

For example, the voice recognition image feedback device may extract objects from the image obtained by the user location tracking device, remove an object which is not person from the extracted objects (filtering process), and determine an object corresponding to the direction which the voice is inputted and magnitude of the voice of remaining objects as the user.

In another example, the voice recognition image feedback device may remove (filter) the other voices except most loudly voice of inputted voices, photograph an image after locating the camera in a direction where remaining voice is inputted, and determine the location of the user by using the voice and the image.

In still another example, the voice recognition image feedback device may extract an object from the image and determine inputted voice as a sound not a voice of the user in the event that the extracted object is a thing such as a television, etc.

In a step of S2306, the voice recognition image feedback device may provide image feedback to the user peripheral location area corresponding to the tracked location of the user.

Shortly, the voice recognition image feedback device of the present embodiment may track accurately the location of the user by using the image through the image photographing device as well as the voice.

The location of the user is determined by using the voice and the image in above description, but a location to be feedback may be determined to another location not the location of the user.

Particularly, the voice recognition image feedback device may track the location of the user by using the voice and the image, determine a peripheral area of the tracked location of the user as a location at which the image feedback is to be provided, and provide an image corresponding to the voice to the determined location.

For example, the voice recognition image feedback device does not provide simply the image feedback in a direction where the voice is inputted, but may provide the image feedback to an area, capable of providing most conveniently an image with high definition to the user, of the user peripheral location area by using the image obtained by the user location recognition device.

Here, the an area capable of providing most conveniently an image with high definition may be an area of showing as it is the image outputted from the voice recognition image feedback device without distortion because curve is not severe in the area.

Accordingly, the voice recognition image feedback device may select an area having high flatness of the user peripheral location area through the image, and determine the selected area as an area at which the image feedback is to be provided.

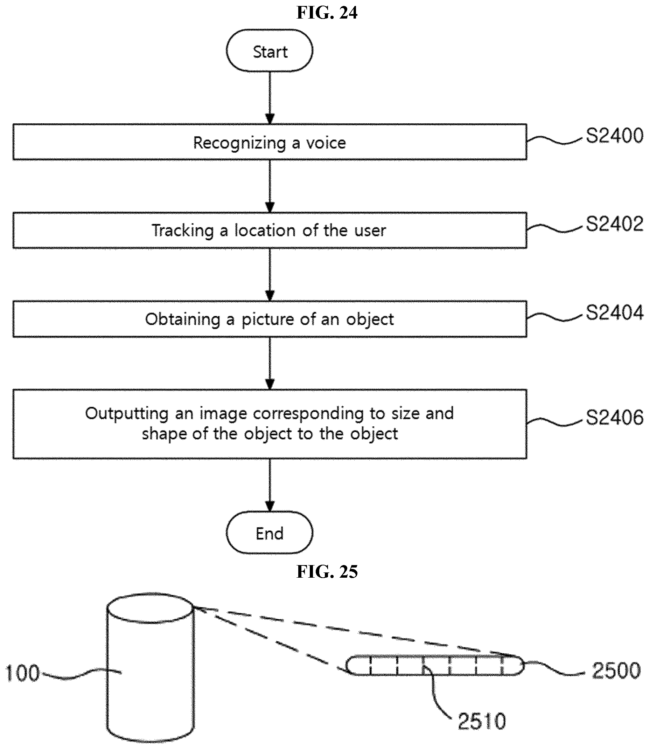

FIG. 24 is a flowchart illustrating a voice recognition image feedback providing system according to a sixteenth embodiment of the invention, and FIG. 25 is a view illustrating one example of a voice recognition image feedback providing process in FIG. 24.

In FIG. 24 and FIG. 25, in a step of S2400, the voice recognition image feedback device recognizes user's location.

In a step of S2402, the voice recognition image feedback device tracks a location of the user in a direction where the voice is inputted.

In a step of S2404, the voice recognition image feedback device obtains a peripheral image of the user by using a camera. Specially, in the event that the user designates an object 2500 through the voice, for example the user inputs a voice "I will cut well a cucumber", the voice recognition image feedback device obtains an image of the object 2500.

In a step of S2406, the voice recognition image feedback device may output an image corresponding to real size and shape of the obtained object. For example, the voice recognition image feedback device may overlap a cucumber image corresponding to real size and shape on the cucumber which is the object 2500, as shown in FIG. 25.

Since the user speaks a word "cut", the voice recognition image feedback device may indicate a cutting-plane line 2510 on the cucumber 2500, so that the cucumber 2500 can be well cut. Accordingly, the user may cut easily the cucumber 2500 along the cutting-plane line 2510.

In brief, the voice recognition image feedback providing system of the present embodiment may obtain the image of the object 2500 and overlap the image corresponding to size and shape of the object 2500 on the object 2500.

As a result, the user may realize easily desired work.

The method of applying the size is applied to the thing in above description, but it may be applied to person.

Particularly, the voice recognition image feedback device may obtain user's image by using a camera and output an image corresponding to real body size of the user.

For example, in the event that the user inputs a voice "please show shirts", the voice recognition image feedback device may output an image of the shirts. Here, the voice recognition image feedback device may adjust size of the shirts in the image to body size of the user and output the image including the adjusted size of the shirt.

That is, the voice recognition image feedback device may output an image including an entity related to the user corresponding to real body size of the user.

The body size of the user is detected through the camera in above description, but the user may register in advance his body size or photograph, etc. to the voice recognition image feedback device or a cloud server. In this case, the voice recognition image feedback device needs not to obtain apart the image of the user.

Hereinafter, embodiments related to operation of a voice recognition image feedback device for recognizing structure of a location at which an image is to be provided and then providing the image will be described with reference to accompanying drawings.

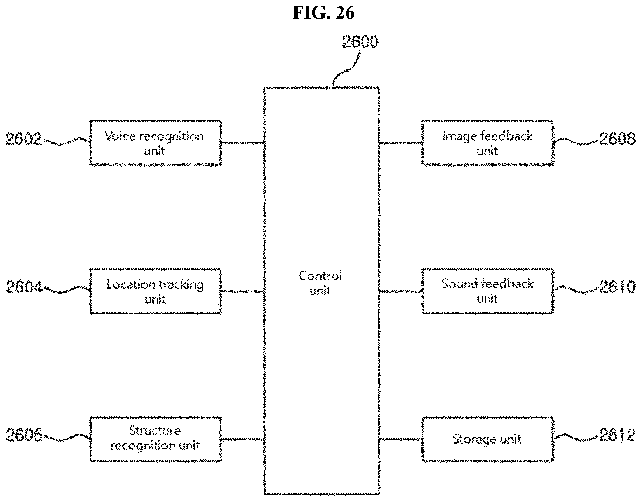

FIG. 26 is a block diagram illustrating a voice recognition image feedback device according to a still another embodiment of the invention.

In FIG. 26, the voice recognition image feedback device of the present embodiment may include a control unit 2600, a voice recognition unit 2602, a location tracking unit 2604, a structure recognition unit 2606, an image feedback unit 2608, a sound feedback unit 2610 and a storage unit 2612.

The voice recognition unit 2602 recognizes user's voice and detect user's request included in the voice by analyzing the voice. The voice recognition unit 2602 takes charge of function related to voice recognition.

The location tracking unit 2604 may track a location of the user by using the voice. The location tracking unit 2604 is in charge of function related to location tracking.

The structure recognition unit 2606 may recognize a structure to which image feedback is to be provided. For example, the structure recognition unit 2606 may recognize a structure of a user peripheral location area by outputting a laser to the user peripheral location area. The structure recognition unit 2606 may include a laser generator.

The image feedback unit 2608 may provide an image corresponding to the voice to the user. The image feedback unit 2608 may adjust resolution, etc. of the image based on the recognized structure.

The sound feedback unit 2610 may provide a sound (voice) corresponding to the recognized voice to the user. The sound feedback unit 2610 is in charge of function related to sound provision.

The storage unit 2612 stores various kinds of information such as the voice, the image, etc.

The control unit 2600 controls elements in the voice recognition image feedback device.

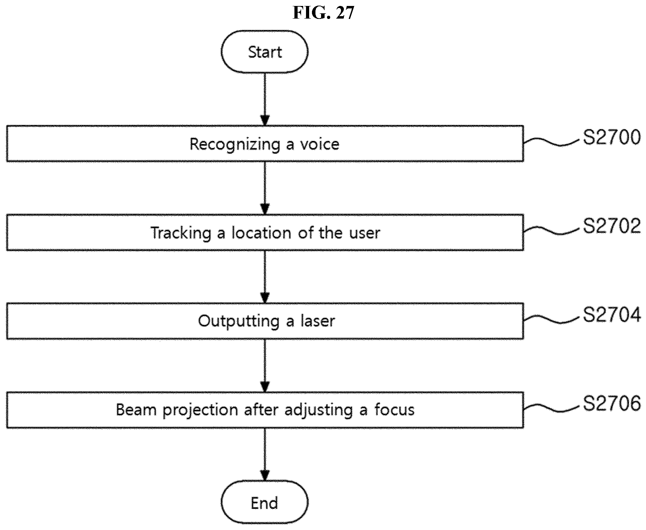

FIG. 27 is a flowchart illustrating operation of a voice recognition image feedback providing system according to seventeenth embodiment of the invention.

In FIG. 27, in a step of S2700, a voice recognition image feedback device of the present embodiment recognizes user's voice.

In a step of S2702, the voice recognition image feedback device tracks a location of the user in a direction where the voice is inputted.

In a step of S2704, the voice recognition image feedback device may detect a peripheral structure by outputting a laser to surrounding of the tracked location of the user. Of course, the voice recognition image feedback device may detect the peripheral structure through image photographing not the laser. That is, the voice recognition image feedback device may include a laser generator for outputting the laser or a camera for obtaining an image.

In a step of S2706, the voice recognition image feedback device provides image feedback to a user peripheral location area corresponding to the tracked location of the user.

Here, the voice recognition image feedback device may apply different focus about the same image according to the detected peripheral structure. That is, the voice recognition image feedback device may output the image with a focus optimized to the peripheral structure detected by the laser.

Adjustment of the focus may be applied for keeping definition of the image in accordance with a distance, as well as the detection of the peripheral structure. Particularly, the voice recognition image feedback device may output the image in a direction where the voice is inputted. The voice recognition image feedback device may output the image to other point according to a distance between the voice recognition image feedback device and the user or preset distance of image output.

For example, the voice recognition image feedback device may output the same image to a point of 1 meter or 3 meter from the voice recognition image feedback device according to situation. Here, definition of the image may differ depending on the point of 1 meter or 3 meter. Accordingly, the voice recognition image feedback device may adjust automatically a focus of the image feedback unit so that definition of the image is the same or most similar irrespective of the point of 1 meter or 3 meter. Of course, the voice recognition image feedback unit may adjust automatically the focus so that the image shown to the user has optimized definition.

On the other hand, the image output in accordance with the distance may be achieved by rotating up and down the image feedback unit by using for example a hinge structure and changing the focus of the image feedback unit according to the point to be outputted. The voice recognition image feedback unit not the image feedback unit may rotate up and down.

Of course, only up and down moving is referred in above description, but left and right moving may be also considered.

The voice recognition image feedback device may output an image having different definition or size, etc. according to the distance by which the image is to be outputted, not the automatic focus adjusting way.

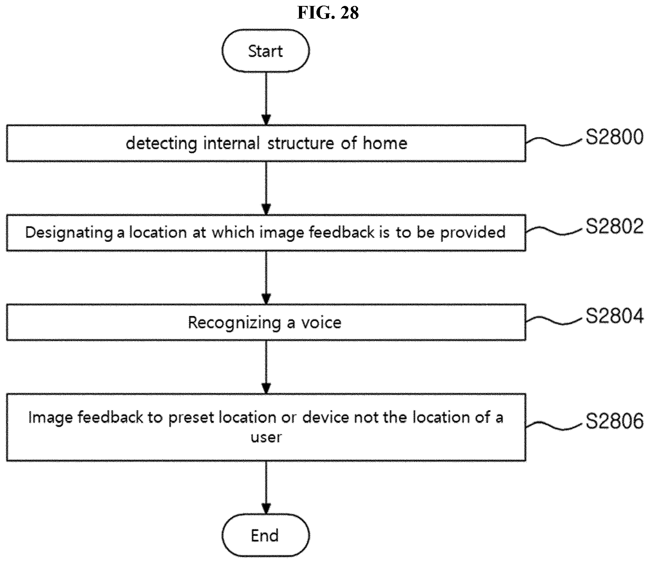

FIG. 28 is a flowchart illustrating operation of a voice recognition image feedback proving system according to an eighteenth embodiment of the invention.

In FIG. 28, in a step of S2800, a voice recognition image feedback device detects internal structure of home, etc. through a camera, a laser and so on.

In a step of S2802, the voice recognition image feedback device designates a location at which image feedback is to be provided.

In one embodiment, the voice recognition image feedback device may output locations, to which image feedback can be provided, through an image or a sound, and the user may select a location at which the image feedback is to be provided of the outputted locations. That is, the location at which the image feedback is to be provided may be determined by the selection of the user.

In another embodiment, the voice recognition image feedback device may determine automatically at least one location proper to provide the image feedback of the detected internal structure.

In a step of S2804, the voice recognition image feedback device recognizes user's voice.

In a step of S2806, the voice recognition image feedback device may provide an image corresponding to the voice to the designated location or a designated device not the location of the user.

For example, the voice recognition image feedback device may provide the image to a location nearest to the location of the user of the designated locations.

For another example, the voice recognition image feedback device may provide the image to a specific location preset by the user or with preset angle, irrespective of a distance to the location of the user. For example, the user may set different location according to theme so that movie is provided on a wall and weather information is provided on a floor of a living room.

In the event that an angle with which an image is outputted is set, the image feedback unit may move up and down through for example a hinge structure. In this case, a distance between a point at which the image is provided and the voice recognition image feedback device may differ according to a location at which the voice recognition image feedback device is set.

For still another example, the voice recognition image feedback device may provide the image to the set device.

Briefly, the voice recognition image feedback providing system of the present embodiment may preset the location or the device to which the image feedback is to be provided, and provide the image feedback to the preset location or device irrespective of the location of the user.

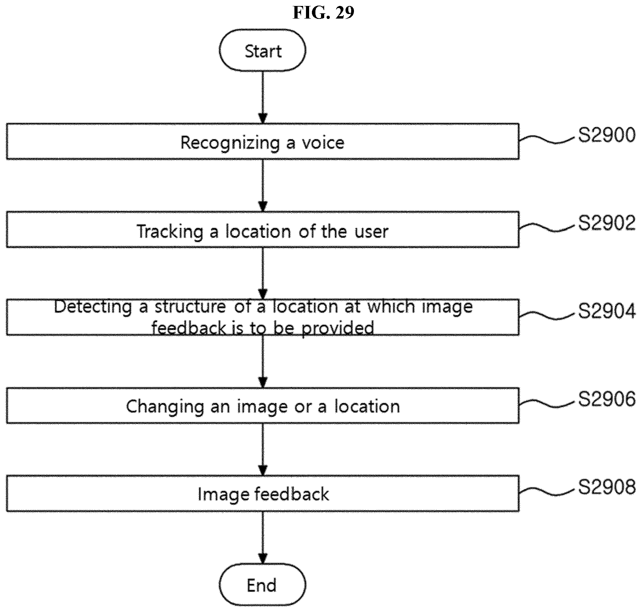

FIG. 29 is a flowchart illustrating operation of a voice recognition image feedback providing system according to a nineteenth embodiment of the invention.

In FIG. 29, in a step of S2900, a voice recognition image feedback device recognizes user's voice.

In a step of S2902, the voice recognition image feedback device tracks a location of the user in a direction where the voice is inputted.

In a step of S2904, the voice recognition image feedback device detects a structure of a location at which an image is to be provided by outputting a laser, etc. to the tracked location of the user and peripheral location.

In a step of S2906, the voice recognition image feedback device may change properly a location at which an image corresponding to the voice or image feedback is to be provided, depending on the detected structure.

For example, in the event that the voice recognition image feedback device can provide an image in high resolution but it is efficient to output an image in low resolution according to the detected structure, the voice recognition image feedback device may change the image in high resolution to the image in low resolution.

For another example, the voice recognition image feedback device may increase brightness of the image when it is determined that a location at which the image is to be feedback is not flat.

For still another example, the voice recognition image feedback device may change a location at which the image feedback is to be provided when the location is not proper to provide the image or better location is detected, according to the detected structure.

In a step of S2908, the voice recognition image feedback device may output the changed image to a user peripheral location area.

Shortly, the voice recognition image feedback providing system of the present embodiment may detect structure of a location at which the image feedback is to be provided, and change resolution, size, definition, etc. of the image or the location at which the image feedback is to be provided, depending on the detected structure.

The voice recognition image feedback device changes the image in above description, but it may prepare an image proper to the detected structure.

Hereinafter, embodiments related to operation of the voice recognition image feedback device for detecting the structure of the location at which the image is to be provided and then providing the image will be described in detail with reference to accompanying drawings.

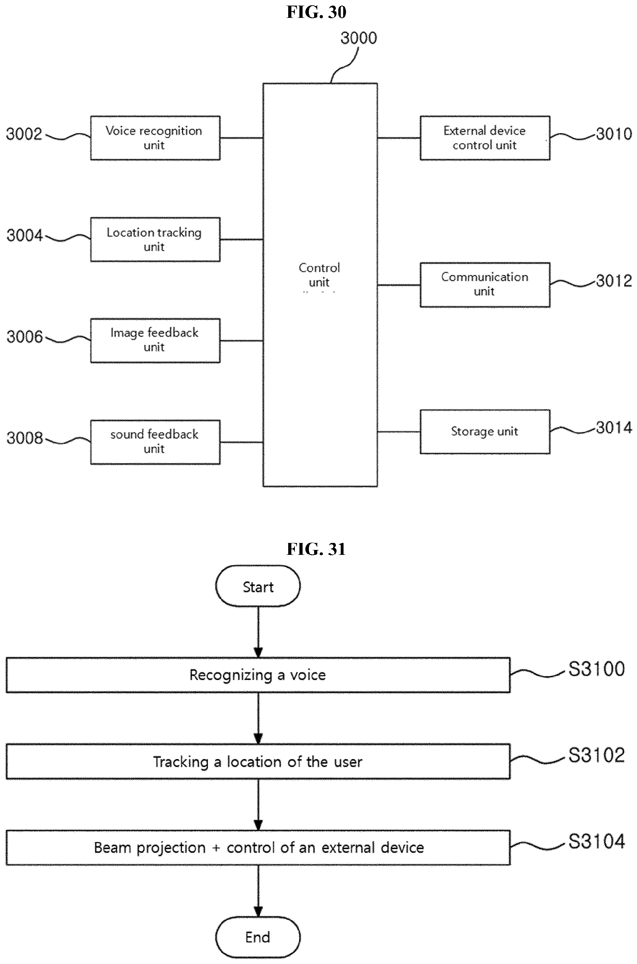

FIG. 30 is a block diagram illustrating a voice recognition image feedback device according to still another embodiment of the invention.

In FIG. 30, the voice recognition image feedback device of the present embodiment may include a control unit 3000, a voice recognition unit 3002, a location tracking unit 3004, an image feedback unit 3006, a sound feedback unit 3008, an external device control unit 3010, a communication unit 3012 and a storage unit 3014.

The voice recognition unit 3002 recognizes user's voice and detect user's request included in the voice by analyzing the voice. The voice recognition unit 3002 takes charge of function related to voice recognition.

The location tracking unit 3004 may track a location of the user by using the voice. The location tracking unit 3004 is in charge of function related to location tracking.

The image feedback unit 3006 provides an image corresponding to the voice to the user.

The sound feedback unit 3008 may provide a sound (voice) corresponding to the recognized voice to the user. The sound feedback unit 3008 takes charge of voice provision.

The external device control unit 3010 may control an external device connected to the voice recognition image feedback device. Particularly, the external device control unit 3010 may control the external device so that the image stands out when the image is provided.

The communication unit 3012 connects the voice recognition image feedback device to the external device.

The storage unit 3014 stores various kinds of information such as the voice, the image, etc.

The control unit 3000 controls operation of elements in the voice recognition image feedback device.

FIG. 31 is a flowchart illustrating operation of a voice recognition image feedback providing system according to a twentieth embodiment of the invention.

In FIG. 31, in a step of S3100, a voice recognition image feedback device of the present embodiment recognizes user's voice.

In a step of S3102, the voice recognition image feedback device tracks a location of the user in a direction where the voice is inputted.

In a step of S3104, the voice recognition image feedback device may control simultaneously an external device with providing image feedback to a user peripheral location area corresponding to the tracked location of the user.

For example, in the event that the user inputs a voice "I want to view a movie titanic", the voice recognition image feedback device may output the movie. In this case, since it is efficient that surrounding of the user is dark for viewing the movie, the voice recognition image feedback device may turn off a peripheral lighting device (external device) or down brightness of the peripheral lighting device with outputting the movie.

In one embodiment, the voice recognition image feedback device may control directly the external device with providing the image feedback.

In another embodiment, the voice recognition image feedback device controls the image feedback. An extra control device connected to the voice recognition image feedback device may control the external device according to request of the voice recognition image feedback device. That is, the voice recognition image feedback device may control indirectly the external device.

In brief, the voice recognition image feedback providing system of the present embodiment may adjust surrounding environment of the image by controlling the external device as well as the image feedback. The control of the external device may be performed according to the user's request or be automatically performed though the user does not request.

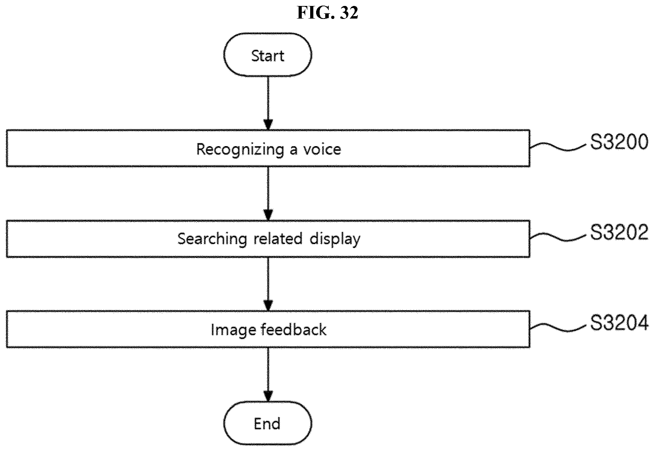

FIG. 32 is a flowchart illustrating operation of a voice recognition image feedback providing system according to a twenty-first embodiment of the invention.

In FIG. 32, in a step of S3200, a voice recognition image feedback device recognizes user's voice.

In a step of S3202, the voice recognition image feedback device searches a display device. Here, the display device is not limited as long as it displays the image, and it may include a television, a smart phone, a table PC and so on.

In a step of S3204, the voice recognition image feedback device may provide an image corresponding to the recognized voice to the user through the searched display device. Here, the display device may be connected to the voice recognition image feedback device via wireless or wire communication.

In short, the voice recognition image feedback device of the present embodiment may provide the image in accordance with voice input to the user through the display device. This method may be used when the user comes close to the display device and it is efficient to provide the image through the display device.

That is, the voice recognition image feedback device may provide corresponding image to the user peripheral location area corresponding to the user according to the user's voice or provide the image to the user through the display device.

Provision of the image to the user peripheral location area or provision of the image through the display device may be automatically determined depending on definition of the image, the location of the user, kind of the image or user's request, etc. Criteria of this selection may be pre-stored by the user.

For example, in the event that the user requests viewing of high-definition movie via the voice, outputting the movie through the display device is better for the user than outputting the movie to a peripheral floor of the user. Accordingly, the voice recognition image feedback device may provide high-definition movie through the display device.

For another example, in the event that the user requests viewing of sports news through the voice, the user can satisfy sufficiently though an image of the sports news is outputted to the user peripheral location area because the sports news does not request high definition. Accordingly, the voice recognition image feedback device may provide the image to the user peripheral location area, considering viewing convenience of the user.

Hereinafter, embodiments related to operation of the voice recognition image feedback device for providing a video call function will be described in detail with reference to accompanying drawings.

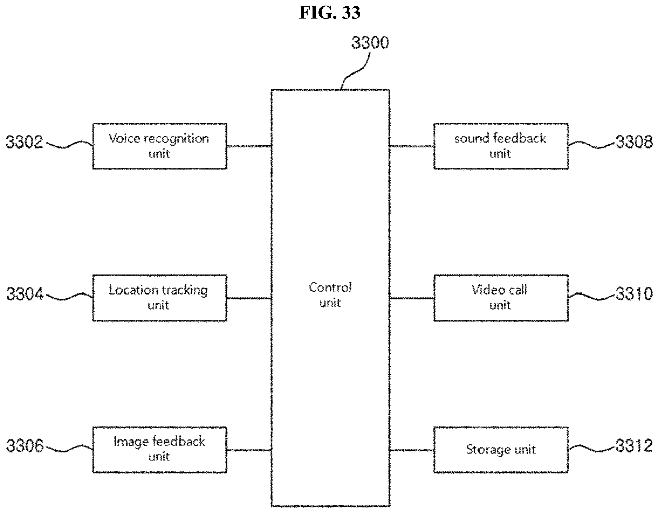

FIG. 33 is a block diagram illustrating a voice recognition image feedback device according to still another embodiment of the invention.

In FIG. 33, the voice recognition image feedback device of the present embodiment may include a control unit 3300, a voice recognition unit 3302, a location tracking unit 3304, an image feedback unit 3306, a sound feedback unit 3308, a video call unit 3310 and a storage unit 3312.

The voice recognition unit 3302 recognizes user's voice and detects user's request included in the voice by analyzing the voice. The voice recognition unit 3302 takes charge of function related to the voice recognition.

The location tracking unit 3304 may track a location of the user by using the voice. The location tracking unit 3304 is in charge of function related to location tracking.

The image feedback unit 3306 provides an image corresponding to the voice to the user.

The sound feedback unit 3308 may provide a sound (voice) corresponding to the recognized voice to the user.

The video call unit 3310 provides a video call by using a function of providing the voice and image. The video call unit 3310 may include a communication unit connected to the other device, for the video call.

The storage unit 3312 stores kinds of information such as the voice, the movie, etc.

The control unit 3300 controls operation of the elements in the voice recognition image feedback device.

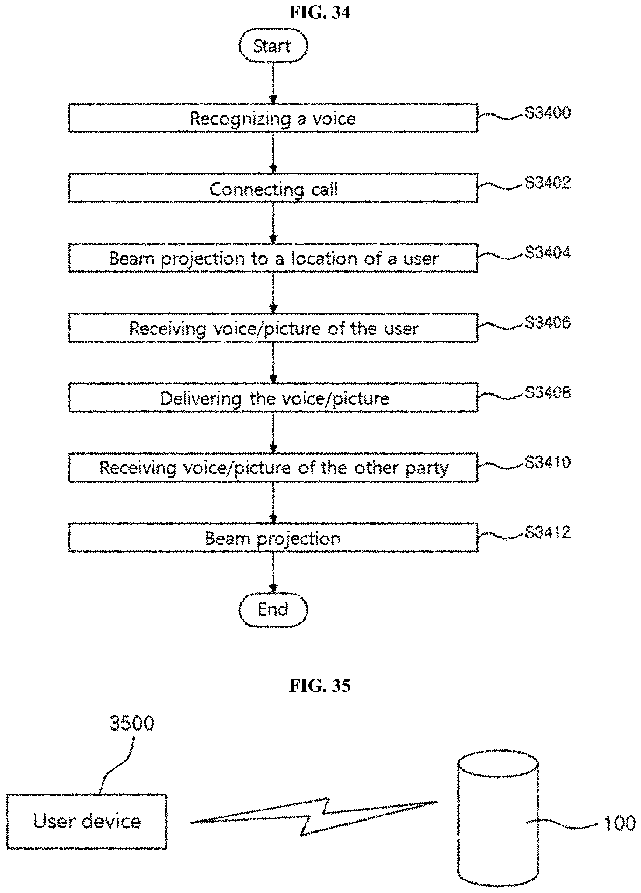

FIG. 34 is a flowchart illustrating a voice recognition image feedback providing system according to a twenty second of the invention.

In FIG. 34, in a step of S3400, a voice recognition image feedback device of the present embodiment recognizes user's voice. Here, the voice includes request of a video call.

In a step of S3402, the voice recognition image feedback device connects to a phone number designated by the user according to the request of the video call by the user. Here, the phone number may be one of phone numbers pre-registered to the voice recognition image feedback device or a phone number inputted by the user. Of course, the user may change or update the phone number registered to the voice recognition image feedback device.

In one embodiment, the voice recognition image feedback device may include a call unit for performing a call function.

In another embodiment, extra communication unit connected to the voice recognition image feedback device may exist, and the voice recognition image feedback device may connect to the phone number designated by the user through the communication device. Here, the call unit of the voice recognition image feedback device is connected to the communication device.

In a step of S3404, the voice recognition image feedback device may output an image of the other party to a user peripheral location area corresponding to a location of the user.

In a step of S3406, the voice recognition image feedback device receives the voice and an image of the user. The voice may be received through a microphone, and the image may be received through a camera.

In a step of S3408, the voice recognition image feedback device delivers the received voice and image to a device of the other party.

In a step of S3410, the voice recognition image feedback device receives the voice and the image of the other party.

In a step of S3412, the voice recognition image feedback device provides the received voice and image of the other party to the user.

The video call may be performed through the above steps.

In brief, the voice recognition image feedback providing system of the present embodiment may provide the video call by using output of the image through the voice recognition image feedback device.

The video call is directly performed in above description, but it may be performed while the voice recognition image feedback device provides the image feedback.

Particularly, in the event that the user requests call or receives call from the other party while the image feedback is provided, the voice recognition image feedback device may change a normal mode to a call mode. Here, the normal mode means a mode for providing corresponding image according to the user's voice.

Subsequently, the voice recognition image feedback device performs video call through the method in FIG. 33. Of course, the call mode will be changed to the normal mode after the video call is finished.

That is, the voice recognition image feedback providing system of the present embodiment may perform changing of the normal mode and the call mode.

Only the normal mode and the call mode are referred in above description, but various modes including a display mode for outputting an image to a display device, etc. may be set, and changing of the modes may be automatically performed according to situation.

FIG. 35 is a view illustrating a voice recognition image feedback providing system according to another embodiment of the invention.

In FIG. 35, the voice recognition image feedback providing system of the present embodiment may include a voice recognition image feedback device 100 and a user device 3500.

The user device 3500 is a device used by the user, for example a smart phone, a remote controller, etc. Here, the user device 3500 may be connected to the voice recognition image feedback device through wireless or wire communication.

In one embodiment, in the event that the user inputs a voice to the user device 3500, the voice recognition image feedback device 100 may receive information corresponding to the voice from the user device 3500 and provide corresponding image to a user peripheral location area.

In another embodiment, the voice recognition image feedback device 100 may recognize directly user's voice and provide an image corresponding to the voice to the user through the user device 3500.

In still another embodiment, the user device 3500 may be a control device of the voice recognition image feedback device. Accordingly, the user may perform power on/off, control setting, etc. of the voice recognition image feedback device 100 by using the user device 3500.

In still another embodiment, to track a location of the user, the voice recognition image feedback device 100 may photograph a location of the user by using a camera and the user device 3500 may recognize the user's voice. In this case, the voice recognition image feedback device 100 may determine the location of the user based on the photographed image and the recognized voice.

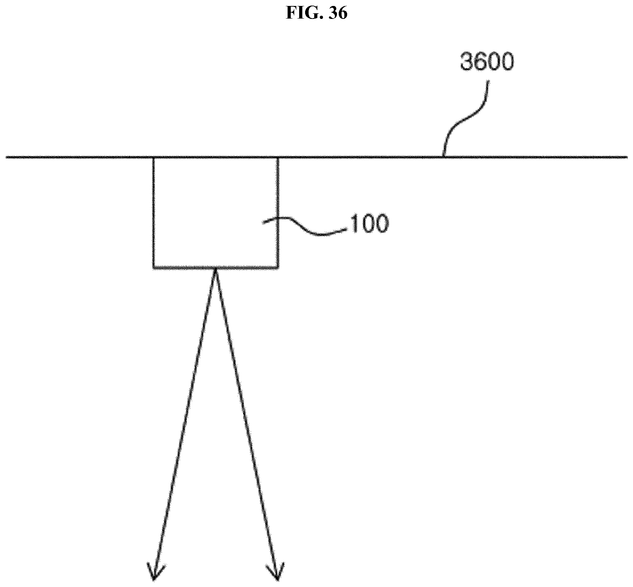

FIG. 36 is a view illustrating schematically a voice recognition image feedback providing system according to still another embodiment of the invention.

In FIG. 36, a voice recognition image feedback device 100 of the present embodiment may be installed on a ceiling 3600 not the floor in a building.

In this case, more clear image may be provided to the user because the image is outputted from the ceiling 3600 to the floor.

In another embodiment, a voice recognition image feedback device may be set on the floor and only an image output unit may be installed on the ceiling 3600. The image output unit may output an image corresponding to the voice to a peripheral floor of the user under control of the voice recognition image feedback device.

In still another embodiment, the voice recognition image feedback device 100 may be installed on a wall not the ceiling 3600.

Shortly, the voice recognition image feedback device 100 of the present embodiment may be installed on various places such as the floor, the ceiling, the wall and so on.

Hereinafter, operation of a voice recognition image feedback providing system including a main device and a sub device will be described in detail.

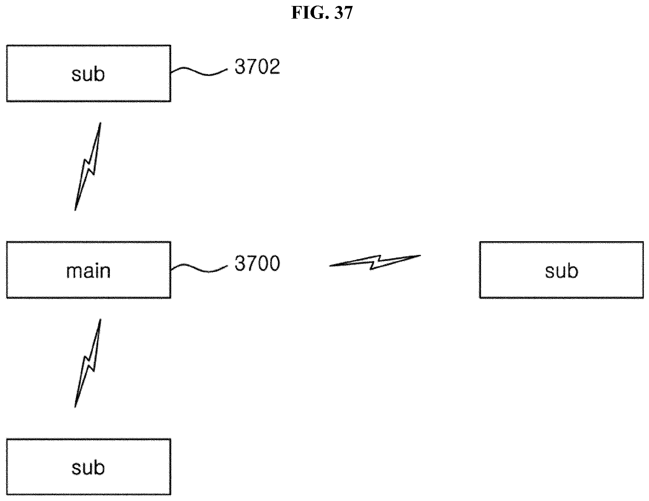

FIG. 37 is a view illustrating a voice recognition image feedback providing system according to still another embodiment of the invention.

In FIG. 37, the voice recognition image feedback providing system of the invention may include a main voice recognition image feedback device (main device) 3700 and at least one sub voice recognition image feedback device (sub device) 3702.

The main voice recognition image feedback device 3700 controls centrally the sub voice recognition image feedback devices 3702.

The sub voice recognition image feedback device3702 is connected to the man voice recognition image feedback device 3700 through wireless or wire communication and may operate according to control of the main voice recognition image feedback device 3700.

The main voice recognition image feedback device 3700 may locate mainly on a central area of the building, e.g. a living room and the sub voice recognition image feedback devices 3702 may locate in a room, a toilet, etc.

The main voice recognition image feedback device 3700 may locate mainly on the floor, and the sub voice recognition image feedback devices 3702 may locate on the ceiling or a wall, etc. as well as the floor.

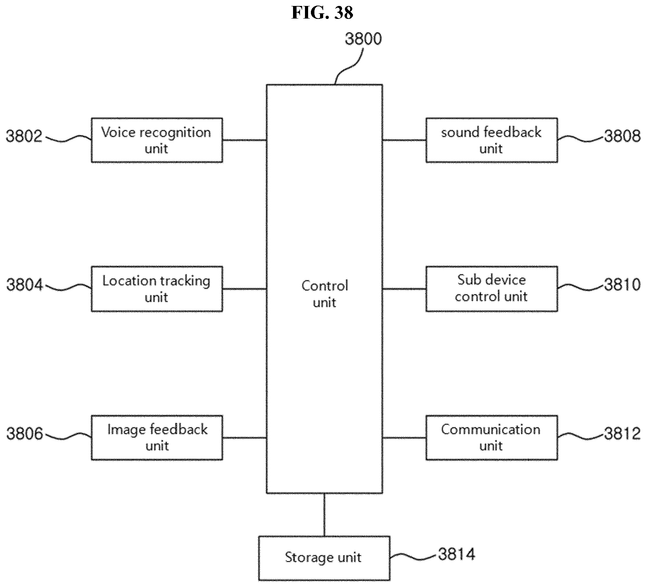

FIG. 38 is a block diagram illustrating a main voice recognition image feedback device according to one embodiment of the invention.

In FIG. 38, the main voice recognition image feedback device of the present embodiment may include a control unit 3800, a voice recognition unit 3802, a location tracking unit 3804, an image feedback unit 3806, a sound feedback unit 3808, a sub device control unit 3810, a communication unit 3812 and a storage unit 3814.

The voice recognition unit 3802 recognizes user's voice and detects request of the user included in the voice by analyzing the voice.

The voice recognition unit 3802 may also receive a voice from a sub voice recognition image feedback device and detect request of the user through the received voice.

The location tracking unit 3804 may track a location of the user by using the recognized voice or the voice provided from the sub voice recognition image feedback device.

In another embodiment, the location tracking unit 3804 may receive information concerning a tracked location from the sub voice recognition image feedback device.

The image feedback unit 3806 provides an image corresponding to the voice to the user.

The sound feedback unit 3808 may provide a sound (voice) corresponding to the recognized voice to the user.

The sub device control unit 3810 controls operation of the sub voice recognition image feedback device. For example, the sub device control unit 3810 may control the sub voice recognition image feedback device to output the image corresponding to the voice through the sub voice recognition image feedback device.

The communication unit 3812 is a connection path between the main voice recognition image feedback device and the sub voice recognition image feedback device.

The storage unit 3814 stores various kinds of information such as the voice, the image and so on.

The control unit 3800 controls operation of elements in the voice recognition image feedback device.

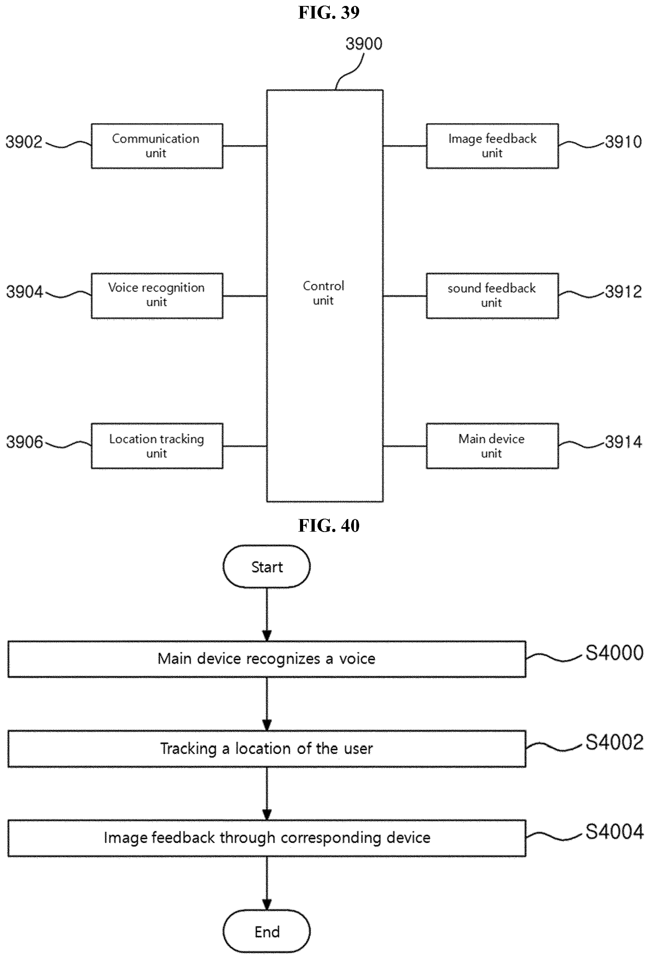

FIG. 39 is a block diagram illustrating a sub voice recognition image feedback device according to one embodiment of the invention.

In FIG. 39, the sub voice recognition image feedback device of the present embodiment may include a control unit 3900, a communication unit 3902, a voice recognition unit 3904, a location tracking unit 3906, an image feedback unit 3910, a sound feedback unit 3912 and a main device unit 3914.

The communication unit 3902 is a connection path between the sub voice recognition image feedback device and the main voice recognition image feedback device.

The voice recognition unit 3904 may receive user's voice and transmit the received voice to the main voice recognition image feedback device. Of course, the voice recognition unit 3904 may analyze the voice and detect user's request according to the analysis.

The location tracking unit 3906 may track a location of the user by using the voice. The location tracking unit 3906 takes charge of function related to location tracking.

The image feedback unit 3910 may receive an image corresponding to the voice from the main voice recognition image feedback device and provide the received image to the user.

The sound feedback unit 3912 may provide a sound (voice) corresponding to the voice to the user.

The main device unit 3914 is connected to the main voice recognition image feedback device, and may perform an operation related to image feedback under control of the main voice recognition image feedback device.

The control unit 3900 controls operation of elements in the sub voice recognition image feedback device.

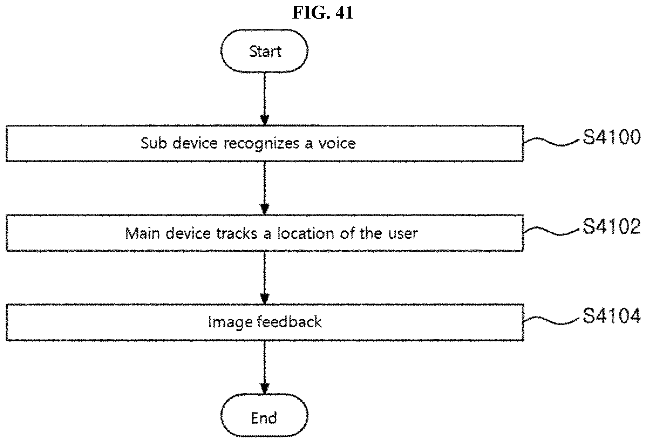

FIG. 40 is a flowchart illustrating operation of the voice recognition image feedback providing system in FIG. 37 according to one embodiment of the invention, and FIG. 41 is a flowchart illustrating operation of the voice recognition image feedback providing system in FIG. 37 according to another embodiment of the invention.

In FIG. 40, in the event that the main voice recognition image feedback device (main device) 3700 recognizes the user's voice in a step of S4000, the main voice recognition image feedback device 3700 or the sub voice recognition image feedback devices (sub device) 3702 may track the location of the user in a step of S4002.

In a step of S4004, the main voice recognition image feedback device 3700 may transmit an image corresponding to the voice to a sub voice recognition image feedback device 3702 nearest to the tracked location of the user, and the sub voice recognition image feedback device 3702 may output the transmitted image to a user peripheral location area corresponding to the location of the user.

In FIG. 41, in the event that the sub voice recognition image feedback device 3702 receives the user's voice in a step of S4100, the sub voice recognition image feedback device 3702 transmits information concerning the received voice to the main voice recognition image feedback device 3700.

In a step of S4102, the main voice recognition image feedback device 3700 tracks a location of the user through itself or the sub voice recognition image feedback devices 3702, preferably the sub voice recognition image feedback device 3702 for receiving the voice.

In a step of S4104, the main voice recognition image feedback device 3700 may transmit an image corresponding to the voice to a sub voice recognition image feedback device 3702 nearest to the tracked location of the user, and the sub voice recognition image feedback device 3702 may output the transmitted image to a user peripheral location area corresponding to the location of the user.

In another embodiment, the main voice recognition image feedback device 3700 recognizes the user's voice, determines the location of the user in a direction where the voice is inputted, and selects optimal sub voice recognition image feedback device 3702 nearest to the determined location of the user.

Subsequently, the main voice recognition image feedback device 3700 may transmit the image corresponding to the voice to the optimal sub voice recognition image feedback device 3702, and the optimal sub voice recognition image feedback device 3702 may output the transmitted image to the user peripheral location area corresponding to the location of the user.

In still another embodiment, the main voice recognition image feedback device 3700 may transmit the image corresponding to the user's voice to plural sub voice recognition image feedback devices 3702, and the sub voice recognition image feedback devices 3702 may output the transmitted image to the user peripheral location area, respectively.

In this case, the images are overlapped and they may be outputted on different areas.

The images outputted from the sub voice recognition image feedback devices 3702 may be the same image or different image. In the event that the sub voice recognition image feedback devices 3702 output different images, the user may receive at a time more information in three-dimensional feeling.

For example, if the user inputs a voice "please show an album", the sub voice recognition image feedback devices 3702 may provide a hologram "high school album" and a hologram "college album" to the user, the holograms being displayed on different areas.

In this case, if the user selects specific entity (for example, an icon, etc.) in the hologram, the main voice recognition image feedback device 3700 or the sub voice recognition image feedback device 3702 may sense moving of the user and provide further different image corresponding to the selected specific entity to the user.

The main voice recognition image feedback device 3700 outputs the image in above description, but the sub voice recognition image feedback device 3702 may also output the image.

In short, the voice recognition image feedback providing system of the present embodiment may include the main voice recognition image feedback device 3700 and the sub voice recognition image feedback devices 3702 controlled by the main voice recognition image feedback device 3700, and may provide various services.

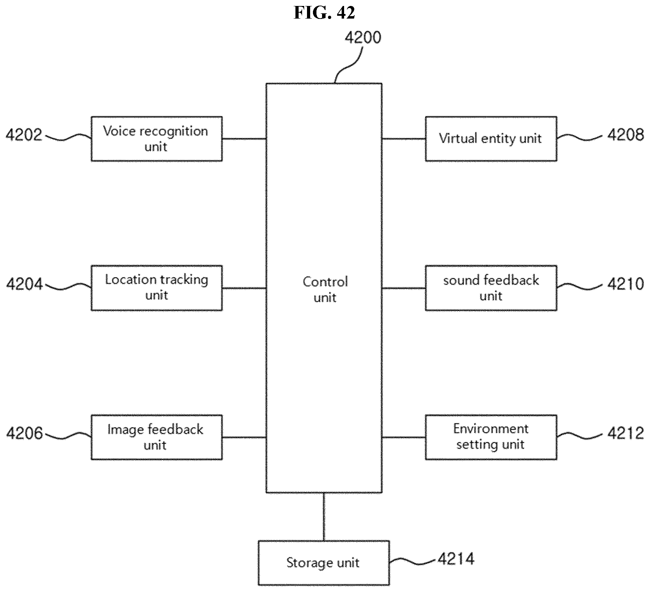

FIG. 42 is a block diagram illustrating a voice recognition image feedback device according to still another embodiment of the invention.

In FIG. 42, the voice recognition image feedback device of the present embodiment may include a control unit 4200, a voice recognition unit 4202, a location tracking unit 4204, an image feedback unit 4206, a virtual entity unit 4208, a sound feedback unit 4210, an environment setting unit 4212 and a storage unit 4214.

The voice recognition unit 4202 recognizes user's voice and detects request of the user in the voice by analyzing the voice.

The location tracking unit 4204 may track a location of the user in a direction of the voice inputted to the voice recognition image feedback device.

The image feedback unit 4206 may provide an image which corresponds to the voice and includes a virtual entity to the user.

The virtual entity unit 4208 generates and manages the virtual entity. Here, the virtual entity is included in the image provided to the user.

The sound feedback unit 4210 may provide a sound (voice) corresponding to the recognized voice to the user.

The environment setting unit 4212 manages various settings of the voice recognition image feedback device, e.g. control a setting related to generation of the virtual entity.

The storage unit 4214 stores various kinds of information such as the voice, the image, etc.

The control unit 4200 controls operation of elements in the voice recognition image feedback device.

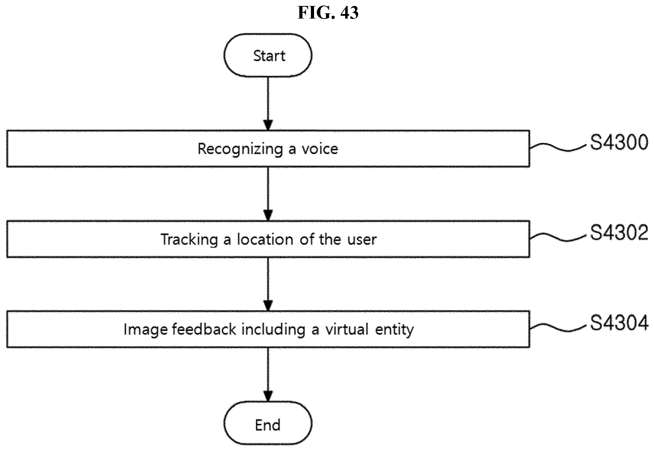

FIG. 43 is a flowchart illustrating a voice recognition image feedback providing system according to a twenty third embodiment of the invention.

In FIG. 43, in a step of S4300, the voice recognition image feedback device recognizes user's voice.

In a step of S4302, the voice recognition image feedback device tracks a location of the user in a direction where the voice is inputted.

In a step of S4304, the voice recognition image feedback device may provide an image including a virtual entity to the user.

For example, in the event that the user inputs a voice "please show a shirt", the voice recognition image feedback device may provide an image where a user entity (avatar), specially a user entity having real body size of the user puts on the shirt to the user.

Accordingly, the user may have more real feeling.

In another example, in the event that the user inputs a voice "please show weekly weather", the voice recognition image feedback device may provide an image including a female weather caster entity for forecasting weakly weather and weekly weather map to the user.

In this case, the entity may forecast dynamically weekly weather.

That is, the entity is not limited as the user entity, but it includes every entity needed for delivering desired information.

Briefly, the voice recognition image feedback providing system of the present embodiment may use the virtual entity so as to deliver better the information to the user.

Only content that the voice recognition image feedback device output the image is described in above embodiments, the user may input new request through a voice, a moving or a display touch after the image is outputted. In this case, the voice recognition image feedback device may provide new image. Here, the provided image may be a still image of displaying only simple information or a moving image.

Setting of the voice recognition image feedback device or the external device is not concretely described, but every method of setting a device may be applied to the invention. Specially, methods of registering the user, setting environment, etc. through the voice or the display touch may be applied to the invention.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

## Claims

1. A voice recognition image feedback device comprising:
a voice recognition unit configured to recognize user's voice;
an image feedback unit configured to output an image corresponding to the voice in a direction where the voice is inputted; and
a control unit configured to control the voice recognition unit and the image feedback unit,
wherein the image is outputted to a user peripheral location area so that the image is shown to the user,
the user peripheral location area means an area having a radius of specific distance based on a point at which the user locates, and at least part of the image is shown in the area having the radius of specific distance.

2. The voice recognition image feedback device of claim 1, wherein the image feedback unit is installed on the voice recognition image feedback device to be rotated.

3. The voice recognition image feedback device of claim 1, further comprising:
a location tracking unit configured to track a location of the user by using a camera,
wherein the location tracking unit tracks accurate location of the user considering the recognized voice and a picture obtained by the camera,
the location tracking unit removes an object corresponding to the other person or an external device from objects in the picture, and determines a location of an object corresponding to magnitude of the voice of remaining objects as the location of the user.

4. The voice recognition image feedback device of claim 3, wherein the location tracking unit detects present location of the user by tracking continuously the location of the user while the image is provided.

5. The voice recognition image feedback device of claim 1, wherein the voice recognition unit recognizes only voice of a person corresponding to pre-registered voice or pre-registered user of voices when the voices of multiple people are inputted,
and wherein the image is not outputted when a voice of person not the person corresponding to the pre-registered voice or the pre-registered user is inputted.

6. The voice recognition image feedback device of claim 1, wherein the control unit requests to the user to select one of plural results and verifies whether pre-registered result exists when the recognized voice includes the results, and requests re-input of the voice to the user when the voice is not related to image provision, request in the voice is unclear, the voice includes a forbidden word or the request in the voice can't be provided by the voice recognition image feedback device,
and wherein the image feedback unit outputs an image corresponding to the result selected by the user or the pre-registered result.

7. The voice recognition image feedback device of claim 1, further comprising:
a mode unit configured to control a sleep mode or an active mode,
wherein in the sleep mode, the voice recognition unit for recognizing the user's voice or a sensor for sensing the user is turned on and the image feedback unit is off state,
the sleep mode is changed to the active mode when the user's voice is recognized, and
the image feedback unit is turned on in the active mode.

8. The voice recognition image feedback device of claim 1, further comprising:
a moving sensor configured to sense a moving of the user,
wherein the image feedback unit outputs the image to a location corresponding to the recognized voice and the sensed moving, or outputs an image corresponding to the recognized voice and the sensed moving.

9. The voice recognition image feedback device of claim 1, further comprising:
a structure recognition unit configured to recognize a peripheral structure of the user by using a laser or a camera,
wherein the image feedback unit changes at least part of a focus of the image feedback unit, a location at which the image is to be outputted or the image, and outputs the image by reflecting the changing.

10. The voice recognition image feedback device of claim 1, further comprising:
an external device control unit configured to control an external device,
wherein the external device control unit adjusts a peripheral environment of the image by controlling the external device so that the peripheral environment corresponds to the outputted image.

11. The voice recognition image feedback device of claim 1, further comprising:
a sound feedback unit configured to output a sound corresponding to the recognized voice,
wherein the control unit determines automatically output of the sound or the image based on at least one of pre-registered word, phrase or sentence, a number of words included in a result to be provided according to the voice, whether the image corresponding to the voice exists or whether request in the voice is related to the image, and it controls the sound feedback unit or the image feedback unit depending on the determining.

12. The voice recognition image feedback device of claim 1, further comprising:
a video call unit,
wherein the video call unit provides a picture and a voice of the other party to the user, and provides a picture and the voice of the user to the other party.

13. The voice recognition image feedback device of claim 1, further comprising:
an image obtaining unit configured to obtain a peripheral picture of the user,
wherein the image feedback unit outputs the image including an entity corresponding to real size or shape of an object in the obtained picture on the object.

14. The voice recognition image feedback device of claim 1, wherein the image includes a virtual entity having an avatar of the user or an entity for guiding information requested by the voice.

15. The voice recognition image feedback device of claim 1, wherein specific users are registered in advance to the voice recognition image feedback device or an external device connected to the voice recognition image feedback device,
and wherein the image feedback unit does not output the image or is not activated when a voice of the other person not the registered users is inputted, and private information related to specific user of the registered users is not provided through the image though a voice of the other users is recognized as long as a voice of the specific user is not recognized.

16. The voice recognition image feedback device of claim 1, wherein the voice recognition image feedback device is connected to an external device,
and wherein the voice recognition image feedback device provides an image corresponding to inputted voice to the user when the voice is inputted through the external device.

17. A voice recognition image feedback device comprising:
a voice recognition unit configured to recognize user's voice;
a location tracking unit configured to track a location of the user;
an image feedback unit configured to output an image corresponding to the voice; and
a control unit configured to control the voice recognition unit, the location tracking unit and the image feedback unit,
wherein the control unit requests re-input of the voice to the user when the voice is not related to image provision, request in the voice is unclear, the voice includes a forbidden word or the request in the voice can't be provided by the voice recognition image feedback device, and the image feedback unit outputs an image corresponding to the re-inputted voice to an area corresponding to the tracked location of the user.

18. The voice recognition image feedback device of claim 17, wherein the image is outputted to a user peripheral location area,
and wherein the user peripheral location area means an area having a radius of specific distance based on a point at which the user locates, and at least part of the image is shown in the area having the radius of specific distance.

19. A voice recognition image feedback device comprising:
a voice recognition unit configured to recognize a voice;
an image feedback unit configured to output an image corresponding to the voice in a direction where the voice is inputted; and
a control unit configured to control the voice recognition unit and the image feedback unit,
wherein the image is outputted through designated area or device when the area or the device on which the image is to be outputted is designated in the voice.

20. A voice recognition image feedback device comprising:
a voice recognition unit configured to recognize user's voice;
an image feedback unit configured to output an image corresponding to the recognized voice; and
a control unit configured to control operation of the voice recognition unit and the image feedback unit,
wherein the control unit determines automatically depending on the voice whether the voice recognition image feedback device outputs only a sound without the image or outputs the image, and outputs the sound by controlling the sound feedback unit or outputs the image by controlling the image feedback unit according to the determining.

21. The voice recognition image feedback device of claim 20, wherein the control unit determines automatically output of the sound or the image based on at least one of pre-registered word, phrase or sentence, number of words included in a result to be provided according to the voice, whether the image corresponding to the voice exists or whether request in the voice is related to the image.

22. A voice recognition image feedback device comprising:
a body; and
an image feedback unit formed on the body to be rotated,
wherein the image feedback unit rotates in a direction corresponding to a user peripheral location area on which an image is to be outputted and then outputs the image corresponding to user's voice.

23. The voice recognition image feedback device of claim 22, further comprising:
a location tracking unit configured to track a location of the user,
wherein the image feedback unit or the location tracking unit rotates by moving along a guide formed on the body.

24. A voice recognition image feedback device comprising:
a voice recognition unit configured to recognize user's voice;
an image feedback unit configured to output an image corresponding to the recognized voice; and
a control unit configured to control operation of the voice recognition unit and the image feedback unit,
wherein at least one of color, picture, resolution and size of the image or a sound matched with the image is changed according to the recognized voice, feeling of the user or biorhythm of the user, and the changed image is outputted on an area corresponding to a location of the user.

25. A voice recognition image feedback device comprising:
a voice recognition unit configured to recognize user's voice;
an image feedback unit configured to output an image; and
a control unit configured to control operation of the voice recognition unit and the image feedback unit,
wherein corresponding image is automatically provided to an area corresponding to a location of the user according to feeling of the user detected based on at least one of tone of the voice, a word showing feeling in the voice or moving of the user, though user's request for requesting image provision is not included in the voice.

26. A voice recognition image feedback device comprising:
a voice recognition unit configured to recognize user's voice;
a structure recognition unit configured to recognize a peripheral structure of the user;
an image feedback unit configured to output an image corresponding to the recognized voice; and
a control unit configured to control operation of the voice recognition unit and the image feedback unit,
wherein the image feedback unit changes at least part of a focus of the image feedback unit, a location at which the image is to be outputted or the image depending on the recognized structure, and it outputs the image by reflecting the changing.

27. A voice recognition image feedback device comprising:
a voice recognition unit configured to recognize user's voice;
an image feedback unit configured to output an image corresponding to the recognized voice; and
an external device control unit connected to an external device and configured to control the external device,
wherein the external device control unit changes a peripheral environment of the image by controlling the external device when the image is outputted.

28. A main voice recognition image feedback device comprising:
a communication unit connected to at least one sub voice recognition image feedback device; and
an image feedback unit configured to transmit an image corresponding to user's voice to a sub voice recognition image feedback device corresponding to a location of a user through the communication unit,
wherein the image is outputted to a user peripheral location area through the sub voice recognition image feedback device,
the user peripheral location area means an area having a radius of specific distance based on a point at which the user locates, and at least part of the image is shown in the area having the radius of specific distance.

29. A voice recognition image feedback device comprising:
a voice recognition unit configured to recognize user's voice;
an image feedback unit configured to output an image corresponding to the recognized voice; and
a control unit configured to control the voice recognition unit and the image feedback unit,
wherein a distance to which the image is to be outputted, an angle by which the image feedback unit outputs the image or a location at which the image is to be outputted is set to the voice recognition image feedback device, and the image feedback unit outputs the image to the set distance, the set angle or the set location in a direction where the voice is inputted.

30. A voice recognition image feedback providing method comprising:
recognizing user's voice; and
outputting an image corresponding to the voice in a direction where the voice is inputted,
wherein the image is outputted to a user peripheral location area so that the image is shown to the user,
the user peripheral location area means an area having a radius of specific distance based on a point at which the user locates, and at least part of the image is shown in the area having the radius of specific distance.

31. The voice recognition image feedback providing method of claim 30, further comprising:
tracking a location of the user by using a camera,
wherein the location of the user is accurately tracked by considering the recognized voice and a picture obtained by the camera.
